(19) Europäisches Patentamt
European Patent Office
Office européen des brevets

(11) Publication number: **0 351 238 A2**

# (12) EUROPEAN PATENT APPLICATION

(21) Application number: **89307173.8**

(51) Int. Cl.$^5$: **F 03 G 3/00**

(22) Date of filing: **14.07.89**

(30) Priority: **15.07.88 GB 8816922**

(43) Date of publication of application:
**17.01.90 Bulletin 90/03**

(84) Designated Contracting States:
**AT BE CH DE ES FR GB GR IT LI LU NL SE**

(71) Applicant: **Scovell, Albert Frederick**
**24 Sugden Road**
**Thames Ditton Surrey KT7 0AE (GB)**

**Symes, Arthur David**
**28-30 Kingland Road**
**Poole Dorset BH15 1TP (GB)**

(72) Inventor: **Scovell, Albert Frederick**
**24 Sugden Road**
**Thames Ditton Surrey KT7 0AE (GB)**

(74) Representative: **Devons, David Jon et al**
**MARKS & CLERK 57-60 Lincoln's Inn Fields**
**London WC2A 3LS (GB)**

The title of the invention has been amended (Guidelines for Examination in the EPO, A-III, 7.3).

(54) **Thrust-generating device.**

(57) An engine is disclosed which comprises a gyroscope means taking the form of a rotating bob (340) which is able to swing in balanced oscillation about the axis of rotation (X) of the plane in which the oscillation takes place and thereby generate thrust. The oscillation condition of the bob arises from the gyroscopic effects which are produced by the plane rotating and this oscillation condition in its turn requires the rotating plane to be driven by a source of mechanical power (through shaft 22). By choosing the characteristics of the gyroscope, the motion of the bob as the gyroscope is rotated can be predetermined and the characteristics may be chosen such that the predetermined motion is in a closed movement cycle, allowing mechanical or electro-mechanical control.

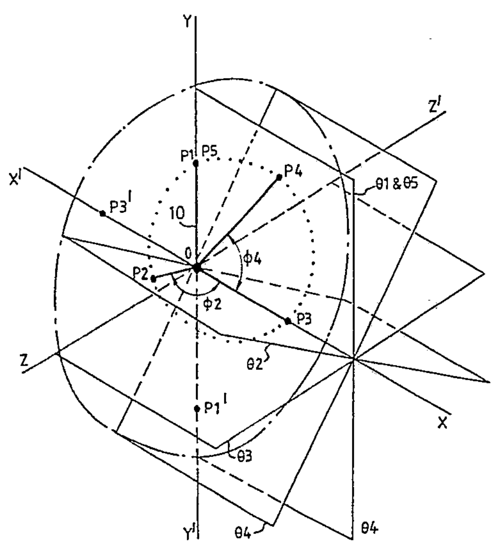

FIG. 2.



Bundesdruckerei Berlin

**Description**

## An Engine

This invention relates to an engine.

All present utilisable devices for producing thrust (wheels, propellers, etc.) produce their driving effect by discharging mass rearwards. The process involved is in keeping with the laws of motion postulated by Newton some 300 years ago. Over this time these laws have been interpreted as implying that thrust generating devices must be dependant upon using the surroundings directly in some way. In general this viewpoint has been considered to be an impregnable one and little effort has been made in the past to probe the logic of this deduction.

Various attempts have been made to produce a viable device for generating thrust without interaction with the surroundings; however, these attempts have generally been unsuccessful or impractical.

According to the invention, an engine is provided which comprises gyroscope means having a spin axis and rotation means for causing rotation about a further axis in respect of which further axis the spin axis of the gyroscope means is conditioned to have a predetermined motion such that, in use, a net force is produced which acts on the engine in a given direction, characterised in that the predetermined motion of the gyroscope means takes up a balanced oscillation with respect to the rotation axis.

Preferably the predetermined motion is such that the gyroscope means moves on a closed cycle of movement.

Embodiments of the invention will now be described, by way of example, with reference to the accompanying drawings in which:

Figure 1 is a schematic drawing of a gyroscope, for explaining the dynamics of the invention;

Figure 2 is a diagram illustrating the motion of a preferred embodiment of the invention;

Figure 3 is a graph illustrating the swing position, velocity and acceleration of a gyroscope during the preferred movement cycle shown in Figure 2;

Figure 4 illustrates the components of force acting on the gyroscope during the motion cycle shown in Figure 2;

Figure 5 illustrates the variation of unbalanced torque of two back-to-back gyroscopes separated by a distance D;

Figure 6 illustrates the variation of angular momentum with rotation angle $\theta$ of the gyroscope during the motion cycle of Figure 2;

Figure 7 shows the variation of torque with rotation angle for the gyroscope during the motion cycle of Figure 2;

Figure 8 illustrates the overall driving torque for a dynamic condition in which the gyroscope and mounting assembly is moving with a velocity V;

Figure 9 illustrates the overall torque for back-to-back balancing of two gyroscopes for the condition of Figure 8;

Figure 10 shows a thrust to velocity characteristic;

Figure 11 illustrates a first embodiment of the invention;

Figure 12 illustrates a second embodiment of the invention;

Figure 13 is a sectional view of a gyroscope assembly and control mechanism for use in the embodiment of Figure 11;

Figure 14 is a multi-section view showing the gearing arrangements at sections A-A, B-B, C-C and D-D of Figure 13;

Figure 15 is an exploded perspective view of the gyroscope assembly of Figure 13;

Figures 16 and 17 are graphs illustrating correction factors necessary for driving the rotating bob of the embodiment of Figure 13;

Figure 18 is a cam profile derived from the correction factors depicted in Figures 16 and 17;

Figure 19 illustrates a modification to the embodiment of Figure 13;

Figure 20 is a graph illustrating the thrust from a centrifugal force effect generated by a further form of gyroscope assembly.

Figure 21 illustrates the resultant thrust from a combination of the kinds of thrust effect shown in figure 20 and figure 4.

Figure 22a-c illustrate third, fourth and fifth embodiments of the invention.

Figure 23 is a sectional view of a gyroscope assembly and control mechanism for use in an embodiment of figure 22 and figure 24 is a sectional view taken in the direction E-E, of figure 23.

Figure 25 is a graph illustrating the variation of angular velocity round the rotating bob axis due to rotation of the plane of swing of the bob.

Figures 26 and 27 show the angle turned through as a result of the variation illustrated in figure 25 plotted against rotation angle and swing angle respectively.

Figure 28 is a developed view of the groove profile of a rack and pinion arrangement for compensating for the variation shown in figure 26.

Figure 29 shows a further means for providing compensation for the rotation angle illustrated in figure 26, using an internal cam and figure 30 is a sectional view showing the cam profile.

Figure 31 illustrates a servo controlled means for providing compensation for the rotation angle shown in figure 26.

Figure 32 is a developed view of the groove profile, for controlling the $\theta$-$\varphi$ relationship in the embodiment of figure 23.

Figure 33 illustrates a servo-controlled modification to the embodiment of figure 23.

Figure 34 is a block diagram illustrating how the embodiment of figure 23 modified with reference to figures 31 and 33 may be controlled electronically.

Figures 35a and 35b show a simplified modification of the gyroscope assembly of figure 23.

This invention has been developed from the realization by the inventor that when a gyroscope moves in a rotating plane, out-of-balance forces, consistent with the postulation that the centrifugal force acting on a precessing gyroscope is zero, are generated which act on the gyroscope and supporting assembly as a whole and that these forces can be used to cause movement of the whole assembly relative to its surroundings.

This will be explained generally with reference to Figure 1 (ignoring phantom lines) which shows a gyroscope 10 which, for the purpose of this example only and the following analysis, is defined as a homogenous rigid body of revolution hereinafter referred to as a rotating bob 12, spinning about its geometrical axis 14 which in turn is rotating about a central principal axis XOX′. The rotating bob 12 is connected to a central pivot at the origin O by a support 16. The pivotal connection at the origin is such as to allow three dimensional rotation of the support 16 about the origin O.

The analysis will be explained with reference to a spherical coordinate system in which the position of the bob 12 is fixed by $\theta$, $\varphi$ and R coordinates, where $\theta$ is the angle of rotation about the XOX′ axis of the plane in which bob 12 lies measured from the XYX′ Y′ plane, $\varphi$ is the angle of swing of the bob in the plane defined by $\theta$ from the X axis, and R is the radius from the origin O to the centre of gravity of the rotating bob 12.

If the orthogonal reference axes are considered to be fixed in space, then the gyroscopic torque for a general $\theta$ - $\varphi$ position is:

$$FxR = I\Omega \sin \varphi\dot{\theta} \quad (1)$$

and thus:

$$F = \left(\frac{I}{R}\right)\left(\frac{\Omega}{\dot{\theta}}\right) \sin\phi\, \dot{\theta}^2 \qquad \ldots(2)$$

Where:

F = the force generated

$\theta$ = rotation angle of axis 14 as previously defined

$\varphi$ = swing angle from X axis as previously defined

I = rotating bob polar moment of inertia

$\Omega$ = rotating bob angular velocity

R = radius from origin of rotating bob centre of gravity.

This force will have an equal and opposite force F acting on the central pivot 16, as shown in Figure 1, which will act on the gyroscope assembly.

This force F can be resolved into two components, namely $F_{(XOX')}$ along the axis of rotation (positive in direction OX′) and $F_{(\theta)}$ at right angles to this, in the plane of rotation (positive radially outwards from axis XOX′), as follows:

$$F_{(XOX')} = \left(\frac{I}{R}\right)\left(\frac{\Omega}{\dot{\theta}}\right) \sin^2\phi\, \dot{\theta}^2 \qquad \ldots(3)$$

$$F_{(\theta)} = \left(\frac{I}{R}\right)\left(\frac{\Omega}{\dot{\theta}}\right) \sin\phi \cos\phi\, \dot{\theta}^2 \qquad \ldots(4)$$

The force component $F_{(XOX')}$ is a thrust force and it can be seen that this force will always act in direction X′ (assuming the angular velocity of the rotating bob and the gyroscope rotating velocity are both positive). Thus, this force will always act to move the whole gyroscope assembly in the direction X′ and thus can be used to propel the assembly.

$F_{(\theta)}$ is an unwanted force which will cause some movement of the gyroscope assembly in the YZ plane, if it is allowed to.

From the above equations (3) and (4) it can be seen that the forces generated are dependant upon the swing angle $\varphi$ (i.e. the angle at which the rotating bob 12 makes relative to the X axis in its plane of rotation). This is related to the angular position $\theta$. In order to provide a workable system it is desirable for this relation to be known. It is also most desirable for reducing the mechanical complexity of any engine built to exploit this effect for the movement to be such that the gyroscope moves in a closed cycle, in other words, the gyroscope returns to its starting position within a integer number of rotations, or a fraction 1/D (D being an integer) of rotation of the gyroscope assembly about the X axis.

Considering the gyroscope 10 shown in Figure 1, this will have an acceleration relative to the fixed axes XYZ of:

$$R(\ddot{\phi} - \sin\varphi \cos\varphi\, \dot{\theta}^2) \quad (5)$$

and the motion equation will be as follows:

$$\left(\frac{I}{2} + MR^2\right)\left(\ddot{\phi} - \sin\phi\cos\phi\, \dot{\theta}^2\right) = I\Omega \sin\phi\, \dot{\theta} \qquad \ldots(6)$$

It follows that:

$$\ddot{\phi} = \dot{\theta}^2 \sin\phi \left[ \frac{I}{(I/2 + MR^2)} \left( \frac{\Omega}{\dot{\theta}} \right) + \cos\phi \right] \quad \ldots(7)$$

$$\dot{\phi} = \int_0^t \dot{\theta}^2 \sin\phi \left[ \frac{I}{(I/2 + MR^2)} \left( \frac{\Omega}{\dot{\theta}} \right) + \cos\phi \right] dt \quad \ldots(8)$$

$$\phi = \frac{\pi}{2} - \int_0^t \left\{ \int_0^t \dot{\theta}^2 \sin\phi \left[ \frac{I}{(I/2 + MR^2)} \left( \frac{\Omega}{\dot{\theta}} \right) + \cos\phi \right] dt \right\} dt \quad \ldots(9)$$

where $t$ = time = $\theta/\dot{\theta}$
$\dot{\varphi}$ = swing angle velocity
$\ddot{\varphi}$ = swing angle acceleration
$\dot{\theta}$ = rotation angle velocity
$\ddot{\theta}$ = rotation angle acceleration
$M$ = rotating bob mass

If it is now assumed that the velocity of rotation about the X axis of the gyroscope 10 is constant, it can be seen that the expression

$$\frac{I}{I/2 + MR^2} \cdot \frac{\Omega}{\dot{\theta}}$$

in the above equations is a non-dimensional number (say K) made up of factors which are under the control of the designer. If K is considered to be a constant, equations (7) to (9) can be solved by finite element integration for a given value of K, thus giving the $\theta/\varphi$ relationship for a gyroscope assembly having I, M, R, $\theta$, and $\Omega$ giving that value of K.

As mentioned, it is desirable that the gyroscope moves on a closed cycle, to allow convenient mechanical implementation. Such a cycle is shown in Figure 2. This figure shows the gyroscope 10 moving from a position P1 to a position P5. The gyroscope 10 is subjected to a rotation clockwise (viewing in direction OX) about the X axis. This component of the movement of the gyroscope can be visualised as the movement of a plane rotating about the X axis. This plane is shown in Figure 2 as θ1-θ5 for each position P1-P5 of the gyroscope 10. The gyroscopic effect will also cause movement of the gyroscope in the rotating plane by the angle $\varphi$. As illustrated, the gyroscope 10 passes through the X axis (i.e. $\varphi = 0$) when $\theta$ is 90°, as measured from the Y axis starting position. Assuming constant rotational speed about the X axis, the forces acting on the gyroscope will be such as to force the gyroscope to return to its starting position within the next 90° of rotation about the X axis, thus providing a closed cycle of movement of the gyroscope 10 within 180° of rotation about the X axis.

In general terms, the dynamic effects being exploited are those associated with a pendulous gyroscope being driven into balanced oscillation about an axis by the effects produced on the gyroscope assembly of driving in rotation about the aforementioned axis the plane in which the oscillation takes place.

Returning now to equations 7 to 9, it can be shown that the value of K which will give $\varphi = 0$ for $\theta = 90$ can be found to occur when:

$$\frac{I}{I/2 + MR^2} \cdot \frac{\Omega}{\dot{\theta}} \approx 2 \quad \ldots (10)$$

(This is the inventors approximation, finer step integration would give a more accurate value, as would be clear to one skilled in the art of solving such equations).

This is the criterion to be met for the gyroscope 10 to complete one cycle of movement in accordance with that proposed in Figure 2 and also establishes the corresponding variations of $\varphi$, $\dot{\varphi}$ and with time or $\theta$. These variations are illustrated in Figure 3.

One factor which it is important to note is that the forces acting on the gyroscope will cause the gyroscope to swing in the rotating plane in a reciprocal or pendulum fashion from $\varphi = +90°$ to $-90°$ and back again from one cycle to the next, so that this motion is not a continuous rotating motion in the rotating plane in one direction.

Using the $\varphi/\theta$ relationship of equation (10), the forces $F_{(XOX')}$ and $F_{(\theta)}$ acting on the whole gyroscope assembly can then be calculated from equations (3) and (4), as shown in Figure 4, in which the two components of equations (3) and (4) are shown independently. As predicted by equation (3), the force along the XOX′ axis is never in the direction X and varies throughout the cycle of movement of the gyroscope 10.

As mentioned $F_{(\theta)}$ is an unwanted force and it is desirable for this force to be balanced out. This can be accomplished by arranging two similar gyroscope assemblies in a back-to-back arrangement. This can be visualised by considering, in Figure 2, another gyroscope, rotating in the same direction as that illustrated but having its starting position P1 lying between O and Y′. Such an arrangement will cause the $F_{(\theta)}$ forces to be balanced out.

However, as the rotating axes of the gyroscope assemblies would need, practically, to be separated one from the other by a certain distance, say D, an unbalanced torque dependent upon the separation distance D would be generated which would act to oscillate the entire arrangement about an axis parallel to and between the rotation axes.

A graph illustrating the nature of the unbalanced torque from such a back-to-back arrangement is shown in Figure 5. It should be noted that this variation is cyclic and thus it is possible by phasing for it to be balanced with several 'back-to-back' assemblies, for example by arranging to have three 'back-to-back' assemblies spaced at 60° angles, as shown in Figure 10, which is discussed in more detail below.

It will be apparent from consideration of the previous analysis that an engine using the above described effect can, by the input of a torque from a power source about the X′OX axis provide an output force along that axis.

The torque required to provide a given force can be calculated by differentiating with respect to time the general expressions for angular momentum about the same axis as used for deriving the forces mentioned above.

At a general $\theta$, $\varphi$ position, the angular momentum and torque resolved into two components, along the XOX′ axis and about the same axis at the angle $\theta$ are as follows:

$$
\begin{aligned}
AM_{(XOX')} &= I\Omega\cos\phi + \left(I/2 + MR^2\right)\sin^2\phi\,\dot{\theta} \\
&= \left(I/2 + MR^2\right)\dot{\theta}\left[\left(\frac{I}{I/2 + MR^2}\right)\left(\frac{\Omega}{\dot{\theta}}\right)\cos\phi + \sin^2\phi\right] \\
&= \left(\frac{I}{2}\right)\left(\frac{\Omega}{\dot{\theta}}\right)\dot{\theta}\left[2\cos\phi + \sin^2\phi\right] \qquad \ldots(11)
\end{aligned}
$$

$$
T_{(XOX')} = \frac{dAM_{(XOX')}}{dt} = \left(\frac{I}{2}\right)\left(\frac{\Omega}{\dot{\theta}}\right)\dot{\theta}\left[2\dot{\phi}\sin\phi\,(\cos\phi - 1)\right] \qquad \ldots(12)
$$

$$
\begin{aligned}
AM_{(\theta)} &= I\Omega\sin\phi - \left(I/2 + MR^2\right)\dot{\theta}\sin\phi\cos\phi \\
&= \left(\frac{I}{2}\right)\left(\frac{\Omega}{\dot{\theta}}\right)\dot{\theta}\left[\frac{I}{I/2 + MR^2}\left(\frac{\Omega}{\dot{\theta}}\right)\sin\phi - \sin\phi\cos\phi\right] \\
&= \left(\frac{I}{2}\right)\left(\frac{\Omega}{\dot{\theta}}\right)\dot{\theta}\left[\sin\phi\,(2 - \cos\phi)\right] \qquad \ldots(13)
\end{aligned}
$$

$$
T_{(\theta)} = \frac{dAM_{\theta}}{dt} = \left(\frac{I}{2}\right)\left(\frac{\Omega}{\dot{\theta}}\right)\dot{\theta}\left[\dot{\phi}\left\{2\cos\phi\,(1 - \cos\phi) + 1\right\}\right] \qquad \ldots(14)
$$

Figure 6 shows the variation with θ of these angular momenta and Figure 7 that for the corresponding torques.

From consideration of $T_{(XOX')}$ it can be seen that this torque is negative in a first range from 0 to 90° and positive in a second range from 90° to 180°. Thus in the first range a driving torque is required to maintain rotation whereas in the second range the torque is in the same direction as rotation and no power will be drawn from a power unit supplying the torque. In the first half of the cycle, the gyroscope 10 acquires kinetic energy which is used over the second half to maintain motion so that when the gyroscope 10 returns to the starting point (P1, P5), all the kinetic energy has been dissipated and the gyroscope 10 is ready to start another cycle. The mean driving torque over the whole cycle is shown by the dotted line. The $T_{(\theta)}$ variation is an unwanted torque and it is necessary to balance it out by using the back-to-back arrangement previously described. The resulting structure must be sufficiently strong to take the resultant $T_{(\theta)}$ loading.

The above considerations for input torque and output force apply for a stationary set of reference axes and provide the static thrust and power characteristics. However, it is necessary to consider how these are modified by the orthogonal axes travelling at a velocity = V which can be assumed to be in the direction X′ of Figure 1.

It can be seen that the rotating bob 12 has superimposed upon it the effects of the whole assembly travelling backwards. This will affect the torque conditions produced about the axis XOX′ axis only and except for this all other effects will be as for the stationary case. Thus, for a general θ-φ point:

$$T = I\Omega\frac{V}{R}\sin\phi \qquad \ldots(15)$$

this can be resolved into its components:

$$T_{(XOX')} = \left(\frac{I}{R}\right)\left(\frac{\Omega}{\dot{\theta}}\right)\dot{\theta}\,\sin^2\phi\;(V) \qquad \ldots(16)$$

$$T_{(\theta)} = \left(\frac{I}{R}\right)\left(\frac{\Omega}{\dot{\theta}}\right)\dot{\theta}\,\sin\phi\cos\phi\;(V) \qquad \ldots(17)$$

As in the previous treatment $T_{(XOX')}$ is the torque to be overcome by the driving torque. In this case there may be resistance over the whole 180° rotation whereas in the stationary case resistance existed only for the 0 to 90° range. $T_{(\theta)}$ is once again an unwanted torque which has to be balanced out by the back-to-back arrangement.

The driving power $P_{(XOX')}$ may be derived from equation (16). Thus:

$$P_{(XOX')} = \left(\frac{I}{R}\right)\left(\frac{\Omega}{\dot{\theta}}\right)\dot{\theta}^2\sin^2\phi\;(V) \qquad \ldots(18)$$

$$= F_{(XOX')}\cdot(V) \qquad (19)$$

This condition means that the law of conservation of energy is satisfied. All the mechanical power less internal friction losses is used to either overcome drag (i.e. heating up the surroundings through external friction effects) or overcoming acceleration effects (i.e. increasing the kinetic energy of the body being pushed) or both effects in combination. As forward velocity increases from zero the negative torque from 90° to 180° will be gradually counteracted and overcome by the torque due to forward velocity until it is overcome completely. Thereafter the stationary torque effect will just produce an unsymmetrical torque distribution (which will be smoothed out when several gyroscope assemblies are used together). Figures 8 and 9 are similar to Figures 7 and illustrate this point for T (θ) and T(XOX′) under the condition of a fixed forward velocity V.

An engine of the type described has a thrust-velocity characteristic as shown, for example, in Figure 10. The curve (A) presented is for a constant power input. It can be seen that starting thrust and acceleration are high and thrust gradually falls as forward velocity increases. Also included is a typical fluid friction drag curve (B). An equilibrium point is established where the two curves meet at which all the power fed to the thruster ends up overcoming fluid friction which produces heat. The velocity axis (C) is the case for a body having no drag (e.g. in a vacuum). In this case all the energy fed ends up as kinetic energy of the body but it should be noted that as velocity increases, the power available for acceleration decreases so that the rate of change of acceleration decreases.

If the frame of reference has an acceleration in addition to velocity then the acceleration will place an additional load on the gyroscope 10 which will be taken by the arrangement preserving the gyroscope's position and through this to the support frame.

The forces and torques produced by the dynamics described are cyclic. They can be split up into those that are wanted and those that are unwanted. The latter are preferably balanced out by a back-to-back arrangement of gyroscope assemblies forming a unit. The cyclic forces and torques (thrust and driving torque) from the unit then need to be smoothed by combining units to give the phasing required for this. A unit has to be a side-by-side arrangement and it is mechanically convenient to combine other units in a radial manner relative to it. The Inventor's analysis has shown that undesirable variations can be reduced to a variation of 4% if three units are radially disposed as, for example, shown in Figure 11.

Figure 11 is an illustration of a three unit radial geometry engine which includes a power unit 20 connected by a drive shaft 22 and gearing (not shown) to a set 23 of gyroscope assemblies all having their primary axis of rotation (XOX′) parallel to the drive shaft 22 and arranged as three units as defined above a first opposed pair 24a,b, a second opposed pair 26a,b and a third opposed pair 28a,b. It is to be understood that the movement of the opposed pairs is such that if the gyroscope assembly 24b has a path of movement as shown, for example, in Figure 2, with the Y axis lying horizontal, with position P1 facing outwards in direction Y, assembly 24a would have a complementary movement, with position P1 also facing outwards in direction Y′.

It should be noted that such an engine will produce a reaction torque on its mountings and so on the body of the engine. If the application is one where this cannot be tolerated, then zero body torque can be provided, as shown in Figure 12 by a power unit 40 driving a contra-rotating gearbox 42 driving two sets 44, 46 of gyroscope assemblies which are themselves operating in a contra-rotation mode so that the net propulsion force acts in the same direction for both sets.

A detailed embodiment of a gyroscope assembly and associated control mechanism for use in the invention using the arrangement shown in Figure 13 will now be described.

The embodiment illustrated can be divided into five main parts, namely, the support structure, power gearing for rotating the gyroscope assembly, which has been given the general designation 200, the gyroscope assembly itself, which has been given the general designation of 300, the drive and control mechanism for the rotating bob, which has been given the general designation 400 and the control mechanism for maintaining the rotation angle/swing angle relationship (i.e. the path shown in Figure 2) which has been given the general designation 500.

Support Structure

The other constituent parts 200-500 are located in a frame of which four bulkheads 110, 120, 130, 140 are shown. The shaft 22 from power source 20 shown in Figure 11 is shown at the top right hand corner of the figure and this drives the power gearing 200 directly and the wheel speed drive and θ-φ relationship drive mechanisms 400, 500 via camshaft extension 145.

The gyroscope assembly 300 is mounted within a rotatable housing comprising a cylinder 100 having end caps 105, 107 connected thereto. The housing 100-107 is supported relative to bulkheads 110, 120 via rotating bearings 150, 160 and a thrust bearing 170 for transmission of the thrust generated by the gyroscope assembly 300 to the supporting structure.

Power Gearing

The power gearing 200 comprises a gear train having a drive shaft gear 210 connected to the drive shaft 22, an intermediate gear 220 and a main shaft gear 230 of the same size as the drive shaft gear 210 and having its centre on the rotation axis (X axis); the main shaft gear 230 is connected to the end cap 105 of the gyroscope assembly housing so that rotation of the shaft 22 will give a corresponding rotation to the gyroscope assembly housing. Whilst only one gyroscope assembly has been shown being driven from the main shaft 22 via gear wheel 210, it will be apparent that the six assemblies 24a-28b shown in Figure 11 may be driven directly from the single gear wheel 210 via a plurality of intermediate gear wheels (220 etc.) disposed at different radial positions.

Gyroscope Assembly

The gyroscope assembly 300 comprises a yoke 310 (see Figure 15) which is mounted on cylinder 100 so as to be rotatable about a swing axis S by means of support pin assemblies 315, 320 which each comprise a connecting sleeve 316, 321 and respective pin 317, 322. A sleeve bearing 335 connected between two stub shaft portions 330 is mounted between sleeves 316, 321 and the rotating bob, here designated 340 and of generally cylindrical form, is received within and guided by the sleeve bearing 335 and a further rotation bearing 336.

In order to bring the centre of gravity of the yoke 310 and connected components onto the swing axis S so as to eliminate centrifugal force effects, metal balancing weights 345, 347 are connected to respective free ends of the yoke 310.

Rotating Bob Drive and Control Mechanism

(a) Drive Mechanism

The rotating bob drive and control mechanism 400 comprises a gear train for producing an uncompensated rotation speed for the rotating bob 340 and a cam actuated compensation assembly for providing compensation for two effects derived from the epicyclic nature of the gearing and the swinging movement of the gyroscope assembly.

A first gear 410 is mounted on camshaft 145 and is driven at the same speed of rotation as the drive shaft 22. This meshes with an intermediate gear 420 which in turn meshes with a gear 430 provided at one end of a hollow shaft 435 which is arranged on the rotation axis (X axis) of the gyroscope assembly 300. Shaft 435 is provided at the other end 437 with a bevel gear which engages with a plurality of, in this case two, bevel wheel gears 445, 450 which are mounted in a bevel wheel box 436 so as to be freely rotatable about respective axes perpendicular to the axis X of rotation of the shaft 435, but which are constrained to follow any rotational movement of the box 436 about the axis X.

A hollow shaft 455, coaxial with the X axis, is provided at one end with a bevel gear 453 which engages with the bevel wheel gears 445, 450 on the opposed side of these wheel gears to bevel gear 437. At the opposed end of the shaft 455 a further bevel gear 460 is provided which meshes with a bevel gear 465 that is rotatably mounted, on the swing axis S, on sleeve 321 of the gyroscope assembly 300. Bevel gear 465 in turn meshes with a bevel gear 470 which is provided as part of the rotating bob 340 (see Figure 15).

Ignoring, for the moment, any rotation of the bevel wheel gears 445, 450 about the axis of rotation of the gyroscope assembly (X axis), it can be seen that the rotating bob 340 will be driven at a constant speed via gears 410, 420, 430, 437, 445, 450, 453, 460, 465 and 470. The bevel gear arrangement 460, 465, 470 will also allow the yoke 310 and attached rotating bob 340 to swing about the swing axis S defined through pins 317, 322 whilst still allowing the bob 340 to be rotatably driven. However, it will be apparent that the swinging movement will cause variations in the rotating speed of bob 340 which will vary as a function of the swing velocity $\varphi$. Furthermore, the rotation of the whole gyroscope assembly about the X axis will impose an epicyclic effect on the gears 460, 465, 470 which will vary as a function of $\theta \cos \varphi$.

The constant rotational speed provided from the camshaft 145 via gear train 410, 420, 430 etc. needs to be compensated to take into account the above effects.

(b) Control Mechanism

Figure 16 shows the way in which the bob angular velocity varies with angle of rotation of the gyroscope assembly about the X axis (with the graph continuing as a mirror image for 90 to 180° of rotation). This angular velocity curve can be integrated to provide the necessary correction to the angular rotation provided from gear train 410-430, as shown graphically in Figure 17.

The actual correction is achieved by effecting a rotation of gear wheel 480 which will in turn rotate bevel gear wheels 445, 450 about the X axis. This movement will modulate the speed of rotation of shaft 455 relative to that of shaft 435. The gear wheel 480 is moved by a pinion gear 485 and rack 487 arrangement, the rack 487 being actuated by a cam 494 via push rod 490 and return spring 492, the cam 494 being mounted on camshaft 145.

The cam profile required to provide the necessary compensationary movement of bevel wheel gears 445, 450 can be constructed using the curve shown in Figure 17 and conventional cam theory. This is shown in Figure 18. The cam profile is a single lobe shape because shaft 455 will rotate through double the angle of gear 480. This allows a second lobe to be added to provide cam operation for a back to back pair of gyroscope assemblies with a single cam, such a cam profile is shown in figure 14.

Rotation Angle/Swing Angle Control Mechanism

The mechanism for providing feedback control of the swing angle $\varphi$/rotational angle $\theta$ position, to ensure a closed cycle of operation, is generally designated by the reference numeral 500 and effectively acts to compare the actual position of the yoke 310 with a predetermined position specified by a combination of a set rotational speed which is provided through gears 505 (mounted on camshaft 145), 510, 515, 520 (which is mounted on a hollow shaft 522), and a variation superimposed on this set speed, provided by a control mechanism similar to that previously described with reference to the rotating bob speed control mechanism 400 and which includes cam 560 mounted on shaft (145), push rod 550, spring 552, rack 545, pinion wheel 540, gear wheel 535, bevel box 532, and bevel gears 525, 530 meshing with bevel gears 523 (provided on shaft 522) and 537 (provided on a shaft 540, which runs through hollow shafts 522, 435 and 455 to gyroscope assembly 300). This combination forces a controlled oscillatory movement of shaft 540 which in turn, through bevel gear 545, which is connected to the shaft 540 and bevel gear 550 which is connected to yoke 310, controls the movement of the yoke. As the gear train 505-520 provides a constant rotation in one direction, the cam must impart sufficient movement to gear wheel 535 to cause a reversal of rotation of shaft 540 every half cycle of rotation of the cam shaft 145.

It should be noted that the primary force acting on the yoke is provided by rotation of the whole gyroscope assembly about axis X, through powered gear train 200 and the $\theta$-$\varphi$ control mechanism 500 acts purely to provide a correction force should the system go out of balance.

The cam profile for cam 560 can be simply derived, using conventional cam theory, from the $\theta$-$\varphi$ relationship shown in Figure 3.

The operation of this embodiment of the invention will now be described with reference to Figure 2. This shows movement of the yoke 310 and rotating bob 340 through a complete rotation about the X axis.

Assuming the device to be initially at rest with the bob as shown in Figure 2, position P1 (note this is not in accordance with Figure 13 but can be visualised as the bob 340 projecting out of the plane of the paper), if a torque is provided to shaft 22 by power source 20, this will rotate gear 210 which in turn will rotate the remainder of power gearing 200 thus rotating the housing 100-107 and gyroscope assembly 300 therein. The gyroscope assembly will thus be caused to rotate from the position shown as P1 in Figure 2, to position P2 in which the cylinder 100 has moved through 45° ($\theta 2$) and, due to the gyroscopic effect, the bob has swung from a swing angle $\varphi = 90°$ to a swing angle $\varphi = 65°$, this movement being predicted by equation 9. However, if due to some imbalance, this path is not precisely followed, a correction is provided via the $\theta$-$\varphi$ correction assembly 500.

Further rotation of the housing 100-107 by power gearing 200 results in continued movement of the gyroscope assembly to the position shown as P3 in Figure 2. As can be seen, the angle of rotation of the cylinder 100 and gyroscope assembly is now 90° and the swing angle is now 0. Further rotation of the cylinder 100 moves the gyroscope assembly to the position shown at P4 and further rotation to complete 180° of rotation of shaft 22 will cause the gyroscope assembly to return to position P1 (P5).

It should be borne in mind now that because the cylinder 100 has only rotated through 180°, the yoke 310 is effectively upside down so although the path followed by the yoke in the next cycle of its movement traces an identical path P1-P5 to that shown in Figure 2, in reality, the yoke is retracing its swing path.

The speed of rotation of the rotating bob 340 is maintained by the rotating bob drive 400 in the manner previously discussed with a "raw" rotation speed being provided through cam shaft 145 and gear train 410-430, this being modulated by the action of cam 494 via rack and pinion and bevel wheel assembly 436-492 to provide a correction for the epicyclic and rotating bob effects, thus maintaining the rotating bob 340 at a constant rotational speed so that the force variations and movement of the yoke 310 are as desired and predicted.

As previously discussed, this movement will generate a reaction force against bulkhead 120, through thrust bearing 170 which will act on the whole engine relative to its surroundings. If the force is made large enough, this will bring about movement of the engine and if the force is sufficient to exceed the weight of the engine and is directed upwards, the engine will lift off.

Figure 19 shows a modification to the embodiment of Figure 13 which enables a higher mass rotating bob to be provided which in turn will allow greater thrust forces to be generated. In this arrangement, the rotating bob 700 is provided with an annular slot 710 in which a cylindrical elongate bearing 720 is retained. The bearing 720 forms part of the yoke 310. This arrangement allows a wide diameter wheel 740 to be disposed outside the direct confines of the yoke 310. The cylinder 100 will need consequent modification to provide a gap or extension through which the wheel 740 may swing, but this arrangement does allow the rotating bob 700 to have a far larger mass as this is not constrained by the dimensions of the yoke 310.

The embodiment described, therefore, is intended to provide a controlled movement through the path shown in Figure 2. However, it will be apparent to those skilled in the art that the designer, by suitable choice of the non dimensional number K, can produce a gyroscope assembly to follow other paths and closed cycles, which will require different wheel speed and θ-φ control assemblies. It is also believed that the engine would work on an open cycle i.e. that the bob would never, or rarely, return to its start position. In this case microprocessor control would be needed to ensure the predicted θ-φ relationship was maintained, by comparison of the positions of the bob with that specified in a look up table, the microprocessor then effecting necessary error control.

Figure 13 shows only a single gyroscope assembly and associated control apparatus. As will be apparent, all six assemblies 24a-28b shown in Figure 11 may be driven directly from the rotating gear 210. In order to provide an appropriate complementary movement between gyroscope assemblies of associated back-to-back pairs (24a, 24b etc.), the twin lobe cam shown in figure 14 is provided. One lobe of the cam will then provide the necessary control functions for a gyroscope assembly 24a, 26a, 28a and the other lobe for the respective opposed gyroscope assembly 24b, 26b, 28b, all assemblies being operated in sequence. The disposition of the assemblies at 60° intervals will provide the necessary phasing for balancing out the torques discussed with reference to Figure 5.

The embodiments so far described include a pendulous gyroscope which oscillates in a plane that is being driven in rotation, as depicted in full lines in figure 1, where the gyroscope can move in the space delineated as the OX side of the YZY′Z′ plane. An alternative arrangement is that shown by the combination of full and phantom in figure 1 which illustrates the rotating gyroscope described earlier with the addition of a freely rotating but non-driven mass 800 disposed in opposition to the driven rotating bob 12. As perviously described, when the configuration is assymetric, as shown in full lines in figure 1, the torque generated by the gyroscope (due to its rotation about the axis XOX′) produces a thrust force in the direction OX′ as illustrated graphically in figure 4. For the device illustrated in full and phantom lines in figure 1, the torque from the gyroscope now drives a symmetrical body and thus no out of balance force is produced at the origin for this condition. However, in this case, the non-rotating mass moving in the space delimited as the OX′ side of the YZY′Z′ plane suffers a centrifugal force which produces a thrust force in the direction OX′.

Consideration is now given to the generation of thrust for the case of a symmetrical body. The velocity "V" of the balancing mass or counterweight is the vector sum of the velocities of rotation and oscillation and thus:

$$V^2 = r^2 \sin^2\phi\,\dot{\theta}^2 + r^2\dot{\phi}^2$$

$$= r^2\dot{\theta}^2\left[\sin^2\phi + \left(\frac{\dot{\phi}}{\dot{\theta}}\right)^2\right] \qquad \ldots(20)$$

Where: m is the mass of the counterweight, r is the radius from the origin to the centre of gravity of the counterweight.

Thus the centrifugal force is given by:

$$C.F. = \frac{mv^2}{r} = mr\,\dot{\theta}^2\left[\sin^2\phi + \left(\frac{\dot{\phi}}{\dot{\theta}}\right)^2\right] \qquad \ldots(21)$$

The variation of this with angle of rotation can be calculated using the θ-φ positional relationship information derived from equation 9 for the symmetrical body.

It will be apparent that the thrust in the XOX′ direction F (XOX′) is:

$$F_{(XOX')} = (C.F.)\cos\phi$$
$$= mr\dot{\theta}^2\left[\sin^2\phi + \left(\frac{\dot{\phi}}{\dot{\theta}}\right)^2\right]\cos\phi \qquad \ldots(22)$$

This force is graphically illustrated in figure 20. It is essential that the counterweight does not rotate about the X axis. The reason for this can be appreciated with reference to figure 1 if the special case of the gyroscope assembly lying along the X axis, with the counterweight pointing in direction X′ is considered (position P3). In this circumstance, when the gyroscope assembly moves from this position, the balance weight will move away from the X axis but it will also be seen that it will rotate relative to the X axis. This rotation will continue but will decrease as the balance weight moves towards the Y′ axis (corresponding to movement of the gyroscope bob 12 from position P3 to position P1) in figure 2 at which point the rotation will have ceased. The rotation of the balance weight will cause the balance weight to behave as a gyroscope in its own right, so that no centrifugal force would be generated in accordance with the initial proposition made at the start of this description. In order to prevent the balance weight from acting as a gyroscope bob, it is made to be freely rotational about the X axis, so that its inertia will hold it in a fixed rotational position relative to the X axis during the movement cycle of the gyroscope assembly.

From comparison of figures 4 and 20 it can be seen that the thrust force due to the "wholly" asymmetric body of figure 4 and the thrust force due to the balanced configuration depicted in figure 20 are out of phase.

Thus, by providing a gyroscope assembly which is between the two extremes of asymmetry and balance, a trade-off between the effects shown in figures 4 and 20 may be obtained. This offers the opportunity of producing a geometry where the two effects suitably combined can produce a nominally uniform thrust over a cycle of rotation.

If the mass of the counterweight 800, say "m", is adjusted so that the peak thrust generated from the centrifugal effect illustrated in figure 20 is made equal to the peak thrust generated by the asymmetrical pendulum effect illustrated in figure 4, then a resultant thrust from the combination of the asymmetrical and symmetrical effects is as shown in figure 21.

This characteristic enables the number of units making up an engine 825 to be reduced to just two arranged in a back-to-back fashion as illustrated in figure 22a which includes two units 810, 820 driven by a power unit 830. It will be apparent that, although the thrust will be reasonably constant, the driving torque will not be evened out over a cycle. Consequently, a flywheel 840 is necessary to even out the required torque variations between the engine 825 and power unit 830.

The arrangement shown in figure 22a would have a torque reaction on the body propelled and figures 22b and c show variations in which this reaction torque would be eliminated. In figure 22b two thrust units 826, 827 are driven through a contra-rotating gear box 828 so that the gyroscope assemblies of the units 826, 827 are driven in a contra rotating manner. In figure 22c, the thrust units 826, 827 instead of being side by side are placed in line.

A gyroscope assembly and control apparatus based on the principle explained with reference to figure 21 is shown in figures 23 and 24. This design further includes other variations in that the rotating bob is electrically driven and the assembly is provided with a reversing facility.

The assembly is, in some respects, similar to that shown in figure 13.

The apparatus shown in figure 23 can be divided into the following main parts:

1. The support structure.
2. Power gearing for rotating the gyroscope assembly.
3. The gyroscope assembly itself.
4. The power supply and input output power and signal connections for the gyroscope assembly.
5. The control mechanism for maintaining the rotation angle (θ)/swing angle (φ) relationship.
6. Counterweight rotation control mechanism.

Support Structure

A shaft 1022 from power supply unit 830, for example, is shown at the top right hand corner of the figure and this drives power gearing 1200 directly. However, unlike the previous embodiment, no camshaft is provided for driving the pendulum bob nor for controlling the θ-φ relationship.

The gyroscope assembly 1300 is mounted within a rotatable housing comprising a cylinder 1100 having end caps 1105, 1107 connected thereto. The housing is supported relative to bulkheads 1110, 1112, 1115 via rotation bearings 1150, 1160 and thrust bearings 1170, 1180. In contrast to the embodiment of figure 13, the two thrust bearings 1170, 1180 are required due to the reversing facility of this embodiment.

Power Gearing

The power gearing 1200 comprises a main gear 1210 engaged with a driven gear 1220 mounted on an annular extension of end cap 1107.

Gyroscope Assembly

The gyroscope assembly 1300 comprises a rotating bob 1310 to which is connected a central shaft 1312, and a separate counterweight 1322. The bob is powered by an induction motor of which a motor armature 1316 is mounted at the free end of shaft 1312 and the rotating bob and shaft assembly are mounted relative to a support frame 1320 by means of bearings 1324, 1326 and relative to the counterweight by means of bearing 1325. The counterweight 1322 is connected to the end cap 1105, 1107 via annular rack and pinion arrangements 1450, 1452 which control the rotation of the counterweight 1322 about the X axis as described below.

An annular field winding 1330 is connected to the counterweight 1322 and is mounted on bearings 1327, 1328 relative to the support member 1320 and coaxial with the armature 1316 and rotating bob 1310. Power to the field winding 1330 is provided from support member 1320 via sets of slip rings and pick ups (not shown). The support frame 1320 is further connected to mounting pins 1332, 1334 which are rotatably mounted about axis S relative to casing 1100 by means of bearings 1345, 1346 to which are connected pinions 1336, 1338. The pinions 1336, 1338 engage corresponding racks 1340, 1342. Each rack 1340 1342 includes a respective guide pin 1341, 1343, the movement of which is guided in a circumferential groove 1350 formed in a stationary outer casing 1190, the groove guiding movement of the rack in the X direction, depending upon its shape. The pinions 1336, 1338 mesh with the racks 1340, 1342 and cause mounting pins 1332, 1334, which are connected to yoke 1320, to rotate. The casing 1190 is held relative to bulkheads 1112, 1115, by means of bearing surfaces 1191, 1192 and a control member 1193 which engages a pin 1194 forming part of casing 1190.

The guide pins 1341, 1343, together with the groove 1350 control the θ-φ relationship. This can best be visualised by considering a schematic development of the cylinder 1190 as shown in figure 32, in which it can be seen that the groove 1350 is of oscillating shape, this providing the swinging movement (φ) as the gyroscope assembly rotates about the X axis (θ). When the casing 1100 and gyroscope assembly 1300 are rotated about the X axis by gear train 1200, the guide pins 1341, 1343 will move in the groove 1350 and will follow its line. This will cause the racks 1340, 1342 to move linearly and cause the pinions 1336, 1338 and thus the gyroscope assembly to rotate about the S axis. The oscillating linear movement of the pins and racks is thus connected into an oscillating rotational movement of the gyroscope assembly.

The shape of the groove 1350 can be calculated from the desired θ-φ positional relationship for the particular gyroscope assembly 1300 employed and from the rack and pinion (1336-1340) ratio.

Input/output power and signal connections for the gyroscope assembly

Power for the electric motor formed by armature 1316 and field winding 1330 is provided by means of slip rings schematically represented by 1400, 1402. Each slip ring 1400, 1402 is of annular form and can be visualised as a ring running normal to the plane of the paper of fig. 23. Corresponding pick-ups (not shown) are mounted in radial recesses 1404, 1406 formed in the support frame 1320 (see fig. 24) and through the support frame provide power lines for the motor and also output lines from transducers (not shown) for sensing the swing angle φ and the bob rotational speed Ω.

The slip rings 1400-1402 are connected to end cap 1105 which forms part of casing 1100. Connections to the surroundings are made through further sets of slip rings 1420, 1422 and pick-ups 1421, 1423. The slip ring sets 1420, 1422 correspond, respectively to slip ring sets 1400, 1402 with suitable interconnections. Pick ups 1421, 1423 are connected to bulkhead 1115.

Counterweight Rotation Control Mechanism

As explained above, in order to prevent the counterweight 1322 producing a gyroscopic effect, it is necessary to control the movement of the counterweight so that it does not rotate relative to the X axis during the engine cycle. Furthermore, in order to provide accurate speed control of the rotating bob 1310, an equivalent compensation is required for the field winding 1330, for which reasons the counterweight 1322 and field winding 1330 are connected and controlled together.

The angular velocity which would need to be compensated if the counterweight 1322 was connected directly to the support member 1320 is equal to the angular velocity $\dot{\theta}\cos\varphi$. The variation of this with rotational speed $\dot{\theta}$ is shown in Figure 25. Integration of this equation provides the angle turned through and this is shown in figures 26 and 27, the former being with respect to rotation angle θ and the latter with respect to the swing angle 90-φ. The information from the latter graph provides the required compensation angle.

In the described embodiment, the compensation is provided by rack and pinion mechanisms 1450, 1452 which comprise a rack 1460, 1462 and a corresponding pinion 1461, 1463. The racks 1460, 1462 are driven by respective pins 1464/5 which engage an equatorial groove 1466 (normal to the plane of the paper in fig. 23) the varying profile of which determines the degree of lateral movement of the racks and hence the amount of compensatory rotation provided by the pinions 1461, 1463, in dependence upon the angle of swing of the rotating bob 1310 about the S axis.

Assuming that the pinions 1461, 1463 have a diameter τ, the rotation information from figure 27 may be used to derive the equatorial cam groove shape as pin travel attached to rack equal to pinion angle to be turned through in radians times 1/2 τ. Figure 28 is a developed view of the groove profile.

The drive from the pinions 1461, 1463 passes to the counterweight 1322 through free wheel devices (ratchet, jamming friction, solenoid operated clutches suitably timed by switches so that on the first half revolution of the gyroscope assembly about the X axis, one rack and pinion drives the counterweight and the other slips. This situation is reversed for the second half revolution. The free wheel devices are required due to the reciprocating swinging motion of the bob which effectively "reverses" the groove profile every 180° of gyroscope assembly rotation.

A simple ratchet device is shown in figure 23 which comprises first and second pairs of complementary serrated surfaces 1370, 1372 which allow unidirectional rotational movement in respectively opposed directions and a spring 1374 disposed between the pairs biasing the surfaces of each pair together.

One surface of pairs 1370, 1372 is formed on pinions 1461, 1463 respectively and the other surface is formed on intermediate shafts 1376, 1378 which are keyed to the counterweight 1322.

Figure 29 illustrates an alternative means of driving the rack and pinion using internal cams 1470, 1471 and oscillating followers 1475-1478.

The pairs of oscillating followers 1475/6 and 1477/8 are connected to a support member 1480. The support member 1480 is provided with four tongues 1490/1, 1492/3 which move in respective oblong slideways 1494/5, 1496/7 formed in the end caps of the housing.

The member 1480 rotates with the housing but also moves laterally in slideways 1494-7 in accordance with the shape of internal cams 1470, 1471. The member 1480 is provided with a circumferential groove 1498 with which the pins 1464/5 of racks 1460, 1462 engage.

A sectional end view of internal cam 1471 is shown in figure 30.

For the case where constant wheel speed is provided by a servo-mechanism, figure 31 shows a design suitable for this variation.

In this variation, the slideways and tongues are replaced by cylinders 1550-3 formed in end caps of the housing and respective pistons 1560-3 formed as part of member 1480. Hydraulic fluid is selectively pumped into or out of the cylinders 1550-3 through oilways 1570-3 under s rvo or computer control to mimic the action of the cams and cam followers of figure 29.

It is also possible, with a slight modification to the embodiment of figure 23 to provide a reversing mechanism. In such a modified embodiment, the rack and pinion assembly 1338, 1342, 1343 is removed.

Reversing of thrust may then be obtained by changing the direction of rotation of the bob 1310, and changing the position of the groove 1350 to control the rotating bob 1310 to move in anti-phase. For example, with reference to figure 2, instead of moving in the cycle P1-P5, the rotating bob would move in a cycle in a position P1′ facing down the Y′ axis to a position P3′ lying along the X′ axis, all movement taking place in the region bounded by ZX′Z′Y′. The path moved through can be visualized by plotting a point symmetrical reflection of the path P1-P5 about the origin O.

For this movement it is necessary for the groove 1350 to be shifted to lie on the other side of the plane which runs through the S axis and normal to the plane of the paper of figure 23. This is illustrated graphically in figure 32, shifting of the groove 1350 (and remaining rack) from position AA to BB will produce the required effect.

In order to provide this shift, a reversing mechanism 1500 is provided. The mechanism comprises a servo motor 1510 which controls the position of the locking member 1193 and thus the casing between positions AA and BB of figure 32.

Instead of changing the direction of rotation of bob 1310, the direction of rotation of shaft 1022 may be changed to allow reversing. In this case, however, the control provided by the free wheel devices of the counterweight control mechanism must be reversed, to allow the ratchets to operate on opposite half cycles to that for forward movement. This may be achieved, for example, by retiming the switch operated clutches.

In operation, the casing 1100 is rotated through gear train 1200 by shaft 1022. The rotating bob is driven by electric motor 1330, 1316 the power for which, and control, is supplied through the sets of slip rings and pick ups. The θ-φ control is provided by means of the groove 1350 and guide pins 1341, 1350, with the counterweight rotation control being provided by the rack and pinion assemblies 1450, 1452.

A variation of the embodiment shown in figures 23 and 24 is illustrated in figure 33. In this figure, the groove 1350 is replaced by an annular groove 1650 which is formed in a cylinder 1652 which is of similar construction to cylinder 1190 except that it is freely movable in the directions G-G′. This movement is then controlled by a control member 1193, the movement of which is controlled continually by the servo motor 1510. The control member 1193 includes a groove 1664 for engaging an annular projection 1666 from the cylinder 1652. Under computer control, the position of the cylinder 1652 and thus the position of the annular groove 1650 may be adjusted. This in turn will change the position of the rack 1340 and thus the rotation angle of the gyroscope assembly 1300.

Therefore, suitable computer control can be implemented to adjust the position of the control member 1193 and thus to provide any desired θ-φ relationship. Servo control of the counterweight position may be achieved in the manner described with reference to fig. 31.

A block diagram of a suitable control system is illustrated in figure 34.

In figure 34, the gyroscope assembly 1300, servo motor 1662, gearing 1200 and power unit 830 are schematically represented by the central boxes, as shown.

Five transducers 1710, 1712, 1714 1715 and 1716 are provided. Transducer 1710 is mounted on the gyroscope assembly and measures the speed of the rotating bob 1310 (Ω) and outputs its signal through one slip ring/contact connection. Transducer 1716 is mounted adjacent to the servo motor 1662 and is arranged to measure the position of control member 1193 which, in turn, is related to the angle of swing φ.Transducer 1714 is disposed adjacent one of the gears of the gear train 1200, preferably the main gear 1210 and measures the angle of rotation of the casing 1100 and gyroscope assembly about the X axis (θ). A fourth transducer 1712 is disposed adjacent to the gearing 1200, for measuring the rotational speed $\dot{\theta}$ of the main gear 1230.

The signal from transducer 1710 is fed through a summing point 1720 where it is compared with a gyroscope motor speed signal Ωd, supplied from a controlling micro processor (not shown). This generates an error signal E1 which is supplied to a gyroscope motor controller 1730 which acts to control the speed of the motor 1330/1316 and thus the speed of the bob 1310.

The signal from transducer 1710 is also fed via to multiplier block 1722 which multiplies the bob speed signal by a factor derived from the factor K, from which the required rotational speed θd can be calculated. The desired and actual speeds are compared in summing point 1723 and any error between the desired speed and actual speed produces an error signal E2 which is fed to a power unit controller 1724, for adjusting the speed of rotation θ.

The transducer 1714 measures the actual rotational position (θ), about the X axis, of the drum 1100. This signal is fed to the micro processor and specifically to a look up table 1730. The look-up table 1730 contains the desired θ-φ relationship information and, from the sensed θ position, generates a desired φ position signal which is fed to summing element 1740 for comparison with the actual φ position sensed by transducer 1716. If these are not in correspondence, an error signal E3 is generated which is applied to a controller 1742 for the servo motor 1662, to adjust the φ position of the gyroscope assembly 1300.

The transducer 1715 measures the rotational position β of the counterweight 1322. This is fed to a summing point 1750 where it is compared with the desired position $\beta_d$ this being derived from the rotation angle θ of the casing 1100 via a look-up table 1752. If these signals are different, an error signal E4 is sent to a counterweight position controller 1755 which sends a correction signal to a servomotor 1757 which acts to control the counterweight rotational position as described with reference to figure 31.

Whilst the various control system blocks have been shown as distinct elements, it will be apparent to one skilled in the art that the functions of most of these elements could be provided by a micro processor and associated memory and interface circuitry.

In the embodiment described with reference to figures 23-33, the features of micro processor control and electrical operation of the rotating bob have been described. These features are equally applicable to the embodiment of the gyroscope assembly and associated control mechanism described with reference to figure 13.

Figures 35a and 35b illustrate a further, simplified gyroscope assembly which uses a non-rotating counterweight in a similar manner to the embodiment of figure 23.

In this embodiment, the field winding of the motor 1816 is mounted rigidly on the support member 1812, with the motor armature 1816 driving the gyroscope bob 1810 in a similar manner to before. With this arrangement the wheel speed will vary over the cycle, as the field winding 1860 is not now journalled to prevent its rotation over the cycle as in the embodiment of figure 23. Consequently, the dynamic equation for this case needs to be solved to derive the θ-φ relationship so that the appropriate groove 1350 shape can be produced. Alternatively, this may be found by systematic experimentation (trial and error).

The non-rotating mass 1822 in this simplified design is freely supported on a spigot 1823 forming part of the support frame 1812. In this case, the non-rotating effect with respect to the X axis is provided by the inertia of the counterweight 1822.

In this design, the slip ring/pick-up arrangement is different, with a circumferential slip/ring set 1840 being provided in the plane of the paper, with corresponding pick-ups 1850 being connected to the support member 1812. The slip ring set 1840 is connected to end cap 1105 and further sets of slip rings 1870, formed as concentric rings 1870 and brushes 1880 are provided between the end cap 1105 and bulkhead 1115.

This design is otherwise similar to that of figure 23.

It is recognised that the mathematical analysis in the specification is of simplified form and makes several assumptions about the nature of the components forming part of the gyroscope assembly. However, the Inventor believes these equations to show the general effect and that more accurate analysis can be undertaken using finite element techniques which will provide far more accurate design data for determining the path of travel of the gryoscope assembly during rotation and thus predicting the forces and balancing required for operation. Such a process would be within the scope of someone skilled in the art once aware of the contents of this specification.

## Claims

1. An engine comprising gyroscope means (10) having a spin axis (14) and rotation means for causing rotation of the gyroscope means (10) about a rotation axis (XOX′) in respect of which rotation axis (XOX′) the spin axis (14) of the gyroscope means (10) is conditioned to have a predetermined motion whereby, in use, a net force is produced which acts on the engine in a given direction, characterised in that the predetermined motion of the gyroscope means (10) takes up a balanced oscillation with respect to the rotation axis (XOX′).

2. An engine as claimed in claim 1, wherein the predetermined motion is such that the gyroscope means (10) moves in a closed movement cycle.

3. An engine as claimed in claim 2, wherein the gyroscope means (10) returns to a starting position in said movement cycle in an integer number of rotations about the rotation axis (XOX′).

4. An engine as claimed in claim 3, wherein the gyroscope means (10) returns to the starting position in one rotation about the rotation axis (XOX′).

5. An engine as claimed in any one ot the preceding claims, wherein the gyroscope means (10) includes a bob (12) rotatable on the spin axis (14) and said motion is determined by a parameter dependent upon the polar movement of inertia (I), the mass (M) and the spin speed (Ω) of the bob (12), the radius (R) from the rotation axis (XOX′) to the bob centre of gravity and the rotation speed (θ) of the gyroscope means (10) about the rotations axis (XOX′).

6. An engine as claimed in claim 5, wherein the parameter (K) is expressed as:

$$\frac{I}{I/2 + MR^2} \cdot \frac{\Omega}{\dot{\theta}}$$

7. An engine as claimed in claim 6, wherein K is selected to be approximately equal to 2.

8. An engine as claimed in any one of claims 1 to 4, wherein said predetermined motion is such that the gyroscope means (10) moves from a first position in which the spin axis (14) is perpendicular to the rotation axis (XOX′) to a second position in which the spin axis (14) is coaxial with the rotation axis (XOX′) and then returns to the first position.

9. An engine as claimed in claim 8, wherein the gyroscope means (10) comprises a rotating bob (12), the predetermined motion being such that the bob (12) moves, relative to the rotation axis (XOX′), along a path in a first direction and then returns along the same path between the first and second positions in an opposite direction.

10. An engine as claimed in claim 9, wherein the rotating bob (12) moves along the path in a said direction through 180° of rotation of the gyroscope means (10) about the rotation axis (XOX′).

11. An engine as claimed in any one of the preceding claims comprising a pair of said gyroscope means (24a,24b; 26a,26b; 28a,28b).

12. An engine as claimed in claim 11, wherein the predetermined motions associated with the pair of gyroscope means (24a,24b; 26a,26b; 28a,28b) are such that forces on each gyroscope means in the plane of rotation about the rotation axis (XOX′) of each gyroscope means (24a,24b; 26a,26b; 28a,28b) counteract one another.

13. An engine as claimed in claim 12 as dependent on claim 8, wherein the first positions of the gyroscope means (24a,24b; 26a,26b; 28a,28b) are back to back.

14. An engine as claimed in claim 13, wherein the spin axes (14) are coaxial in said first positions.

15. An engine as claimed in any one of claims 11 to 14, wherein the rotation axes of the pair of gyroscope means (24a,24b; 26a,26b; 28a,28b) are spaced one from the other.

16. An engine as claimed in any one of claims 11 to 15 comprising a plurality of said pairs of gyroscope means (23;24), the gyroscope means being radially disposed about a central axis.

17. An engine as claimed in claim 16, wherein three said pairs (23;24) are provided.

18. An engine as claimed in claim 16 or 17, further comprising a further plurality of said pairs of gyroscope means (46), the gyroscope means of the respective pluralities (44,46) being rotated in opposed directions about their respective rotation axes and the gyroscope means of the first plurality (44) being arranged to produce said net force in the same direction as the second plurality (46).

19. An engine as claimed in any one of claims 15 to 18, wherein said rotation means (40) is common for all said pairs, the engine further comprising transmission means for coupling the rotation means (40) to each gyroscope means (44,46).

20. An engine as claimed in claim 19, wherein the rotation means is mounted on the central axis.

21. An engine as claimed in any one of the claims 1 to 5 or 9 to 29, wherein the or each gyroscope means comprises first and second masses, said masses being rotatable on the spin axis and wherein the first mass is driven and the second mass is not.

22. An engine as claimed in any one of the preceding claims wherein the direction of the net force can be reversed by adjustment of controlling and driving functions.

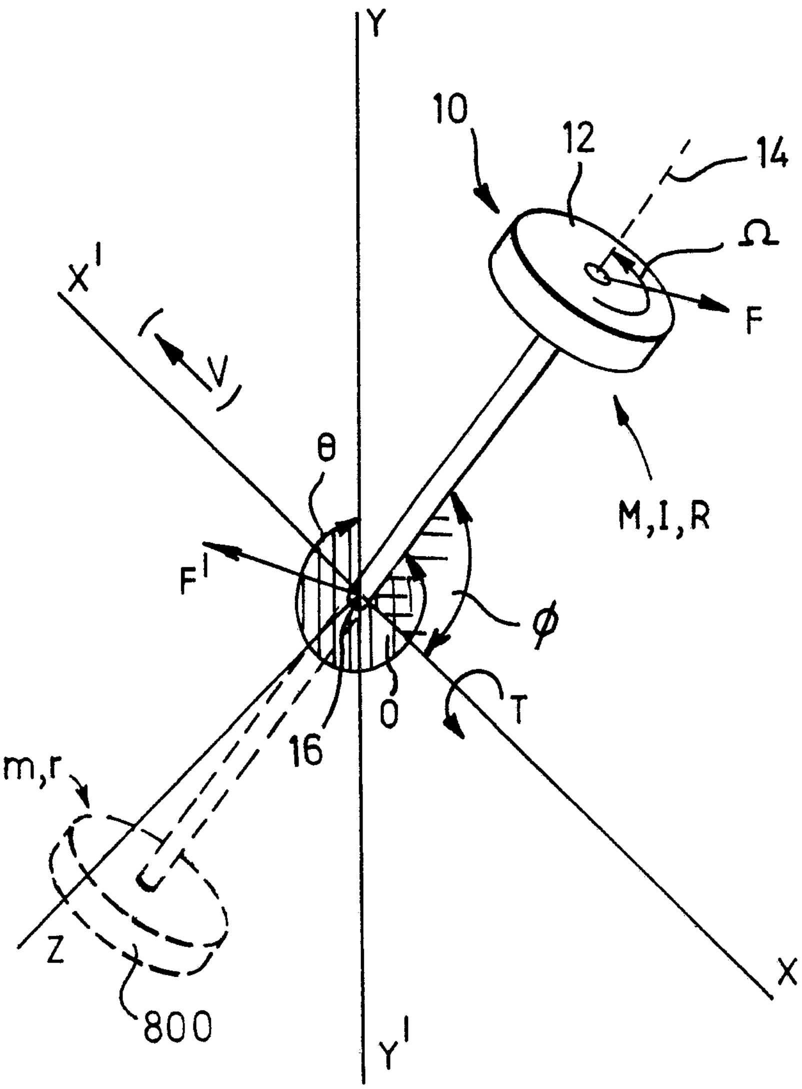


FIG.1.

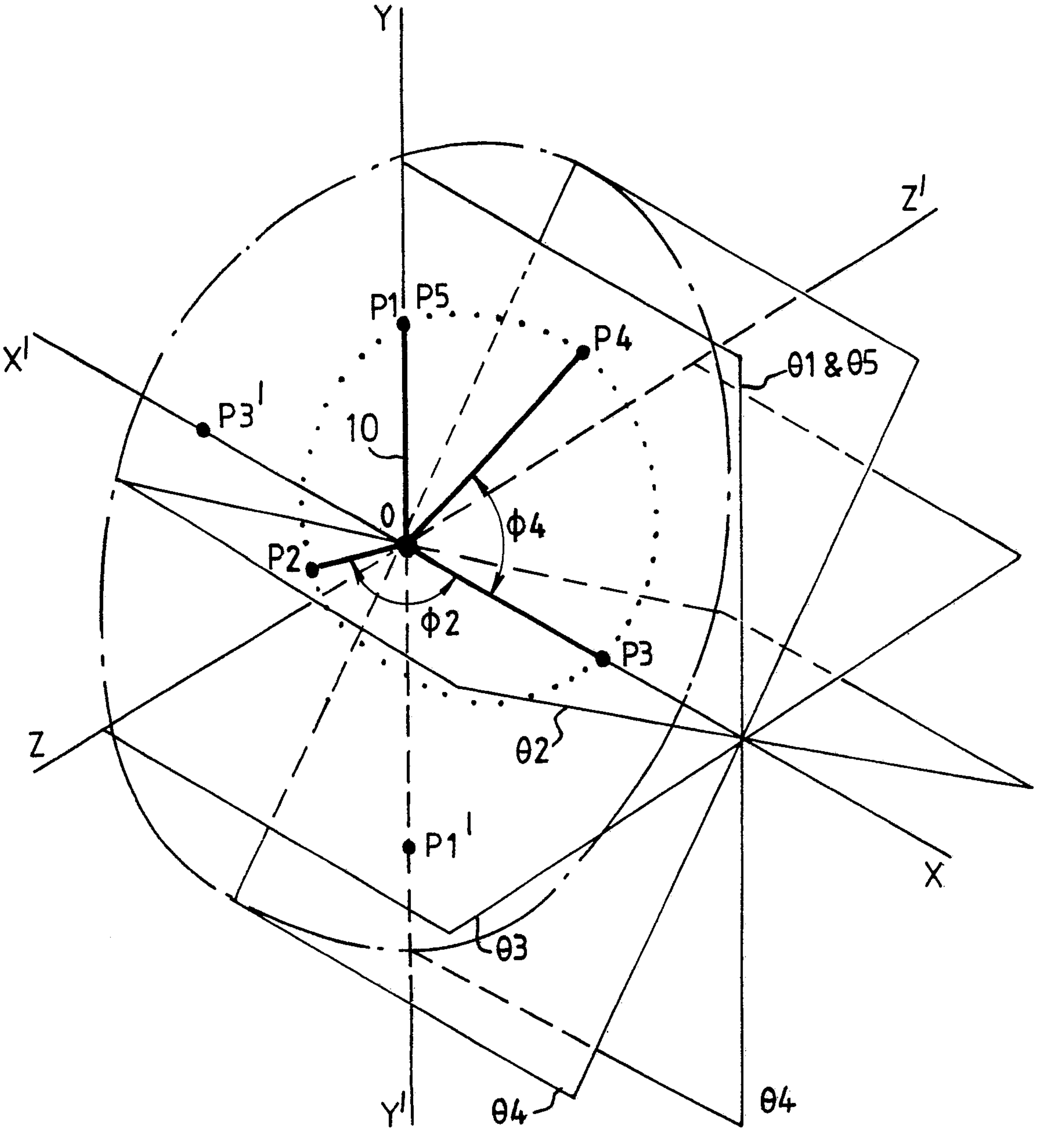


FIG. 2.

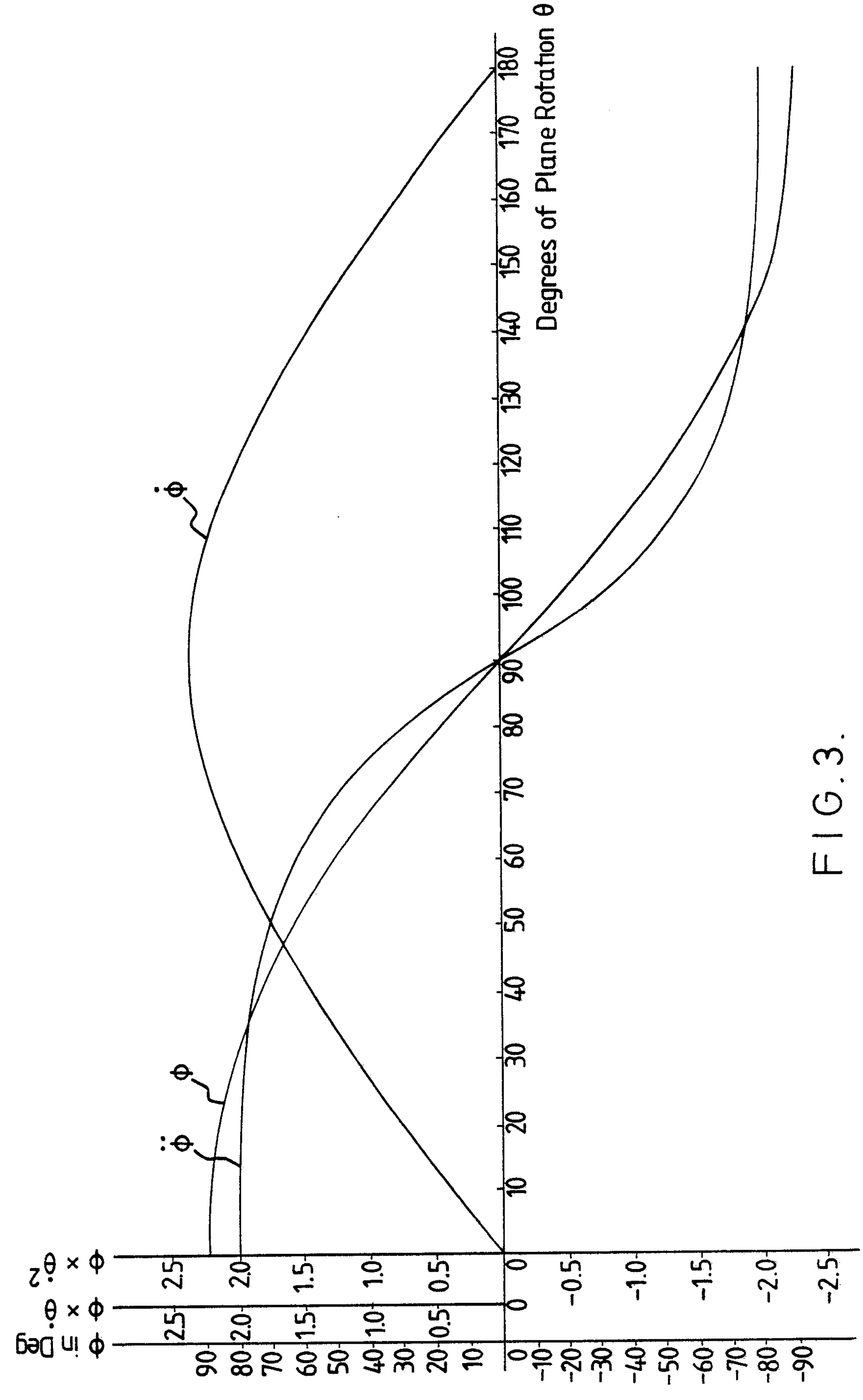
Degrees of Plane Rotation θ
0
10
20
30
40
50
60
70
80
90
100
110
120
130
140
150
160
170
180
φ in Deg
φ × θ̇
φ × θ̇²
90
80
70
60
50
40
30
20
10
0
-10
-20
-30
-40
-50
-60
-70
-80
-90
2.5
2.0
1.5
1.0
0.5
0
-0.5
-1.0
-1.5
-2.0
-2.5
φ
φ̇
φ̈

FIG.3.

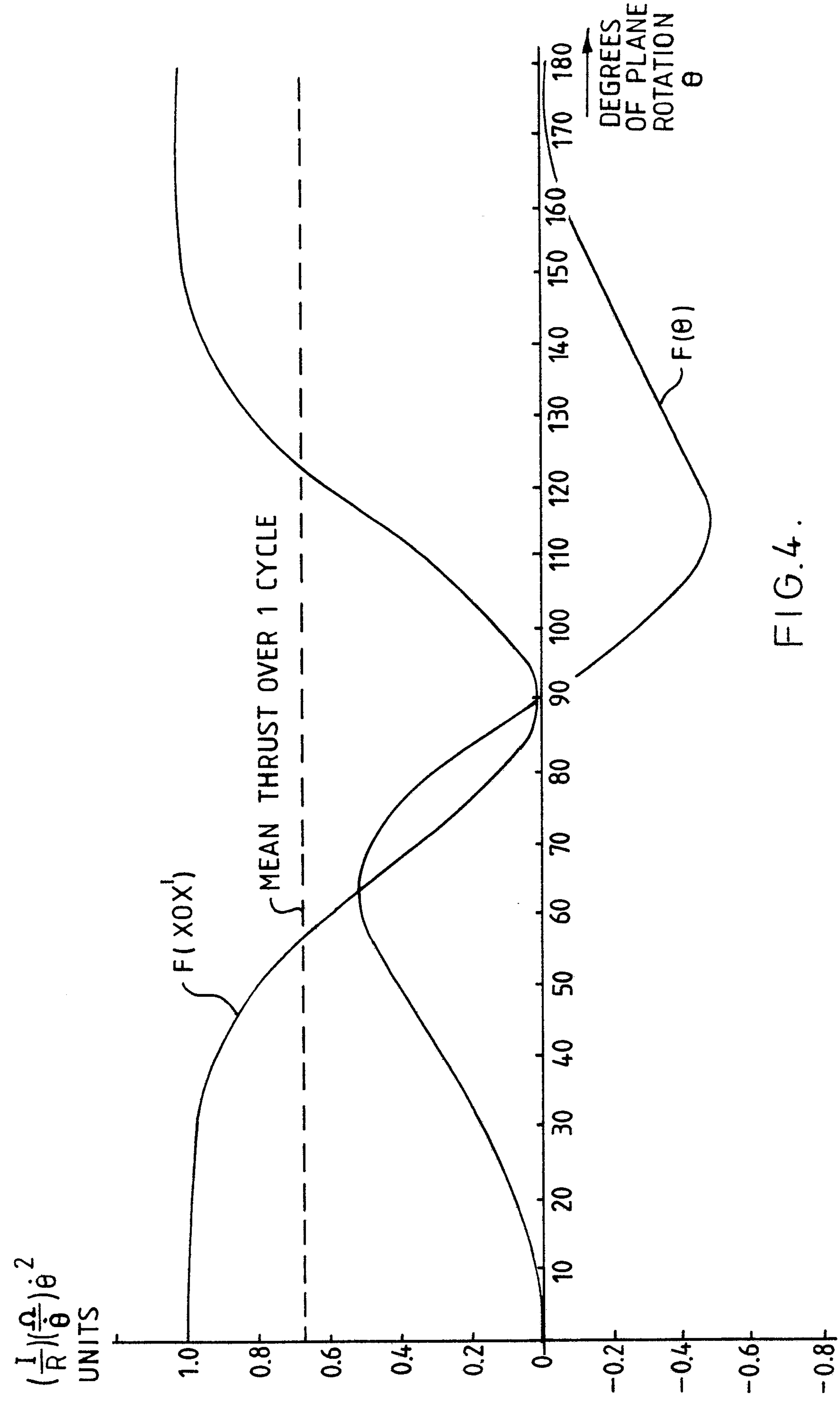
$(\frac{I}{R})(\frac{\Omega}{\dot{\theta}})\dot{\theta}^2$
UNITS
1.0
0.8
0.6
0.4
0.2
0
-0.2
-0.4
-0.6
-0.8
10
20
30
40
50
60
70
80
90
100
110
120
130
140
150
160
170
180
DEGREES OF PLANE ROTATION θ
MEAN THRUST OVER 1 CYCLE
F(XOX')
F(θ)

FIG.4.

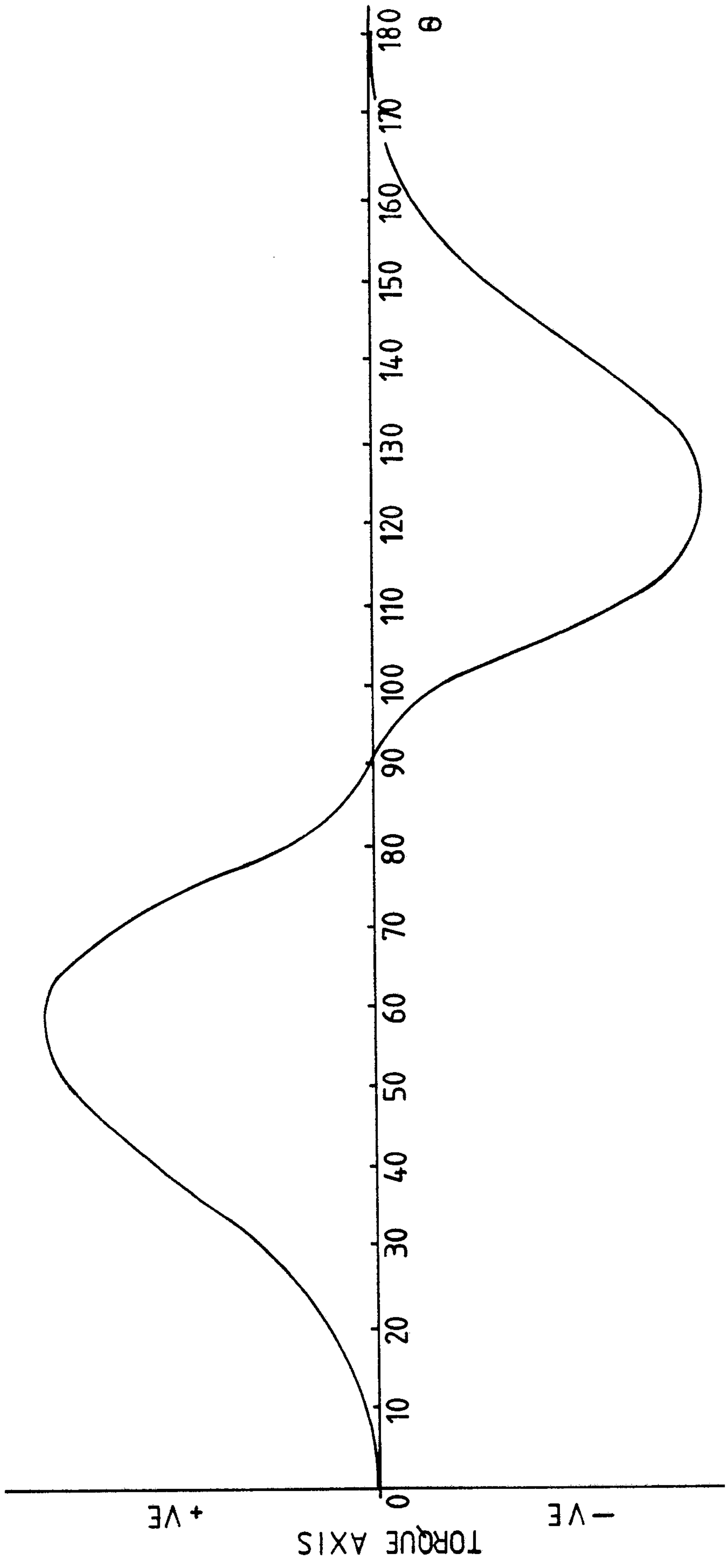
θ
0
10
20
30
40
50
60
70
80
90
100
110
120
130
140
150
160
170
180
+VE
TORQUE AXIS
−VE

FIG.5.

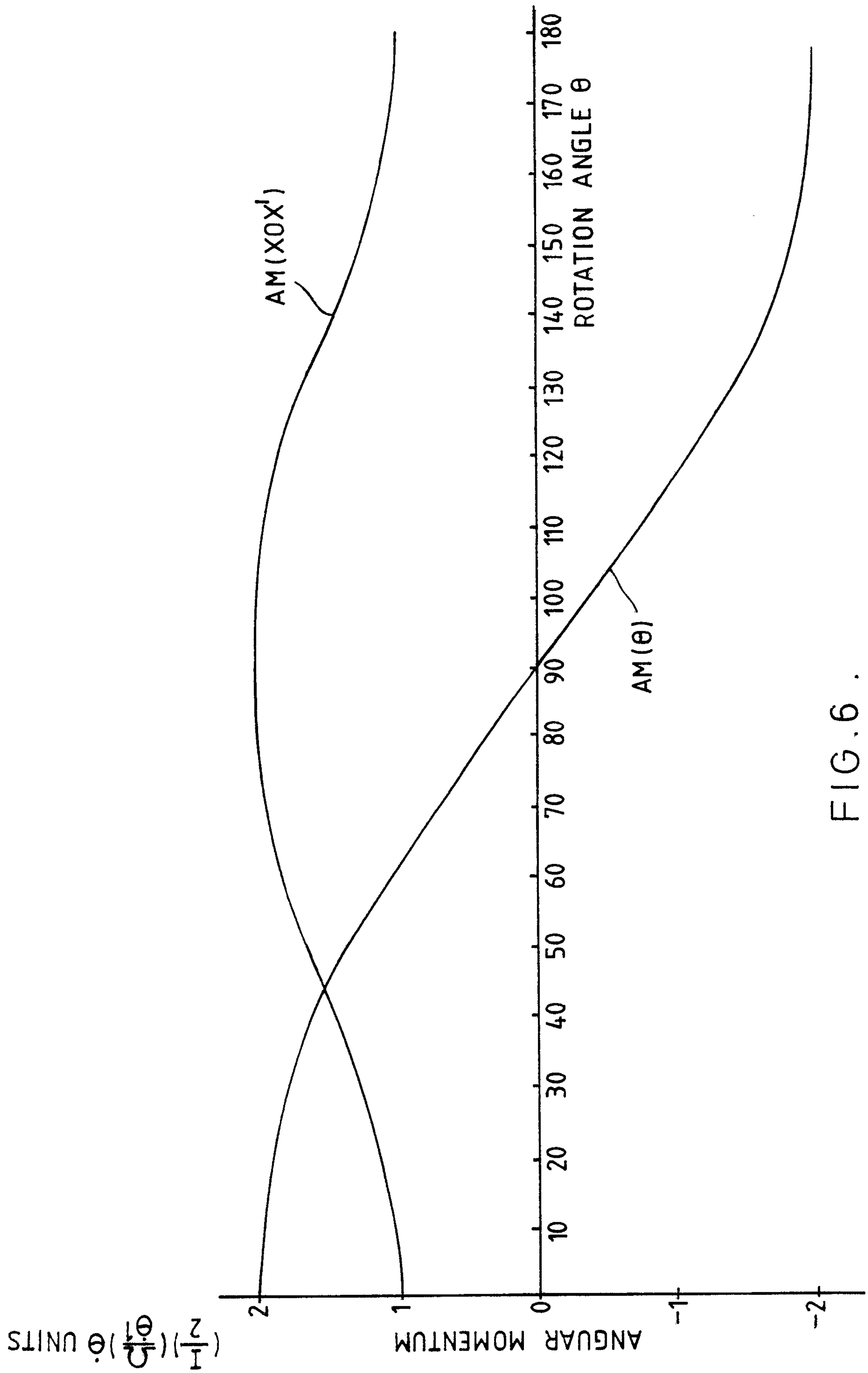
AM(XOX')
AM(θ)
ROTATION ANGLE θ
10 20 30 40 50 60 70 80 90 100 110 120 130 140 150 160 170 180
2 1 0 -1 -2
ANGUAR MOMENTUM
UNITS

FIG.6.

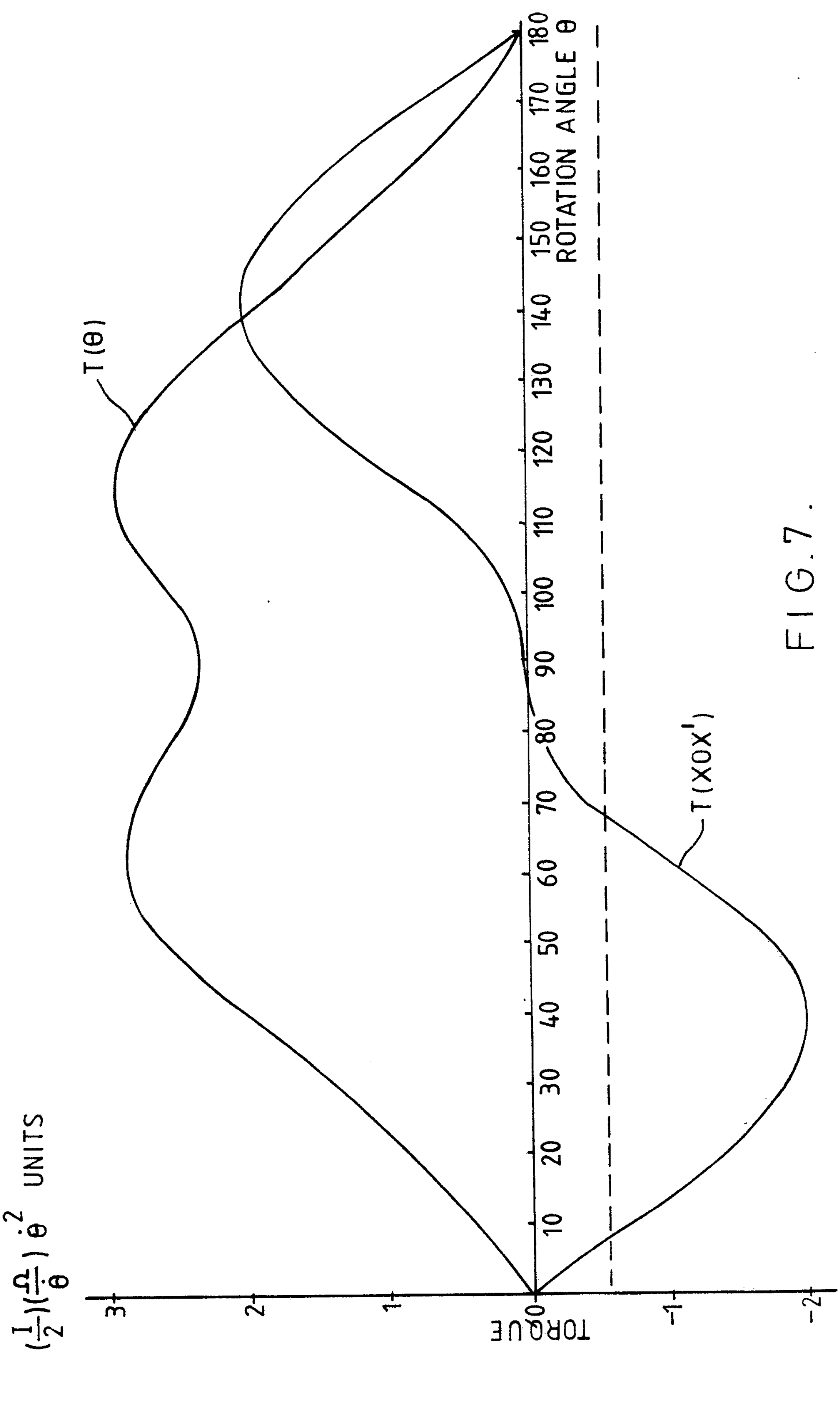
$(\frac{I}{2})(\frac{\Omega}{\dot{\theta}})\dot{\theta}^2$ UNITS
TORQUE
3
2
1
0
-1
-2
0
10
20
30
40
50
60
70
80
90
100
110
120
130
140
150
160
170
180
ROTATION ANGLE θ
T(θ)
T(XOX')

FIG.7.

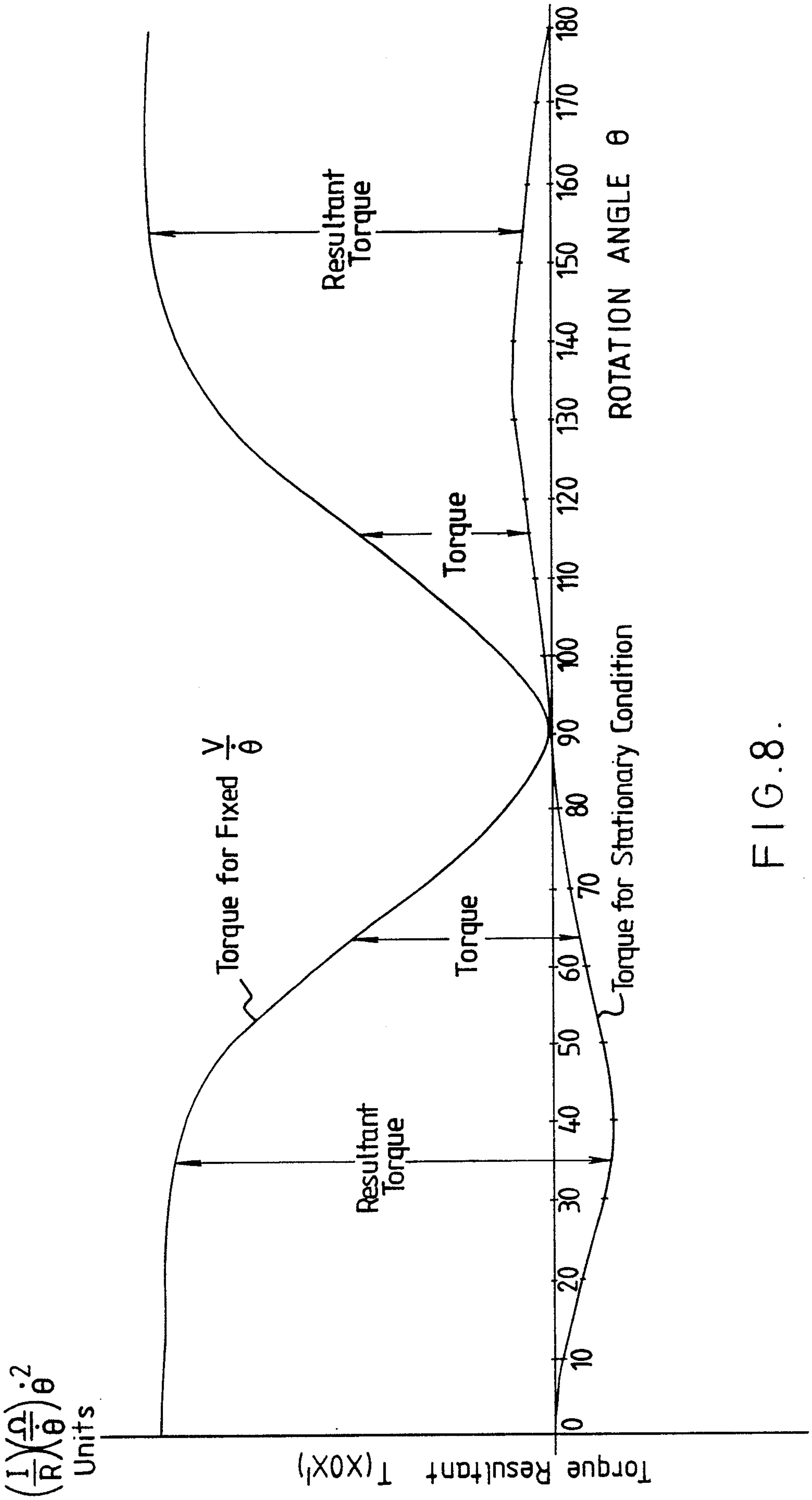
Torque for Fixed $\frac{V}{\dot{\theta}}$
Resultant Torque
Torque
Torque
Resultant Torque
Torque for Stationary Condition
ROTATION ANGLE θ
0
10
20
30
40
50
60
70
80
90
100
110
120
130
140
150
160
170
180
$\left(\frac{I}{R}\right)\left(\frac{\Omega}{\dot{\theta}}\right)\dot{\theta}^2$ Units
Torque Resultant T(X0X1)

FIG.8.

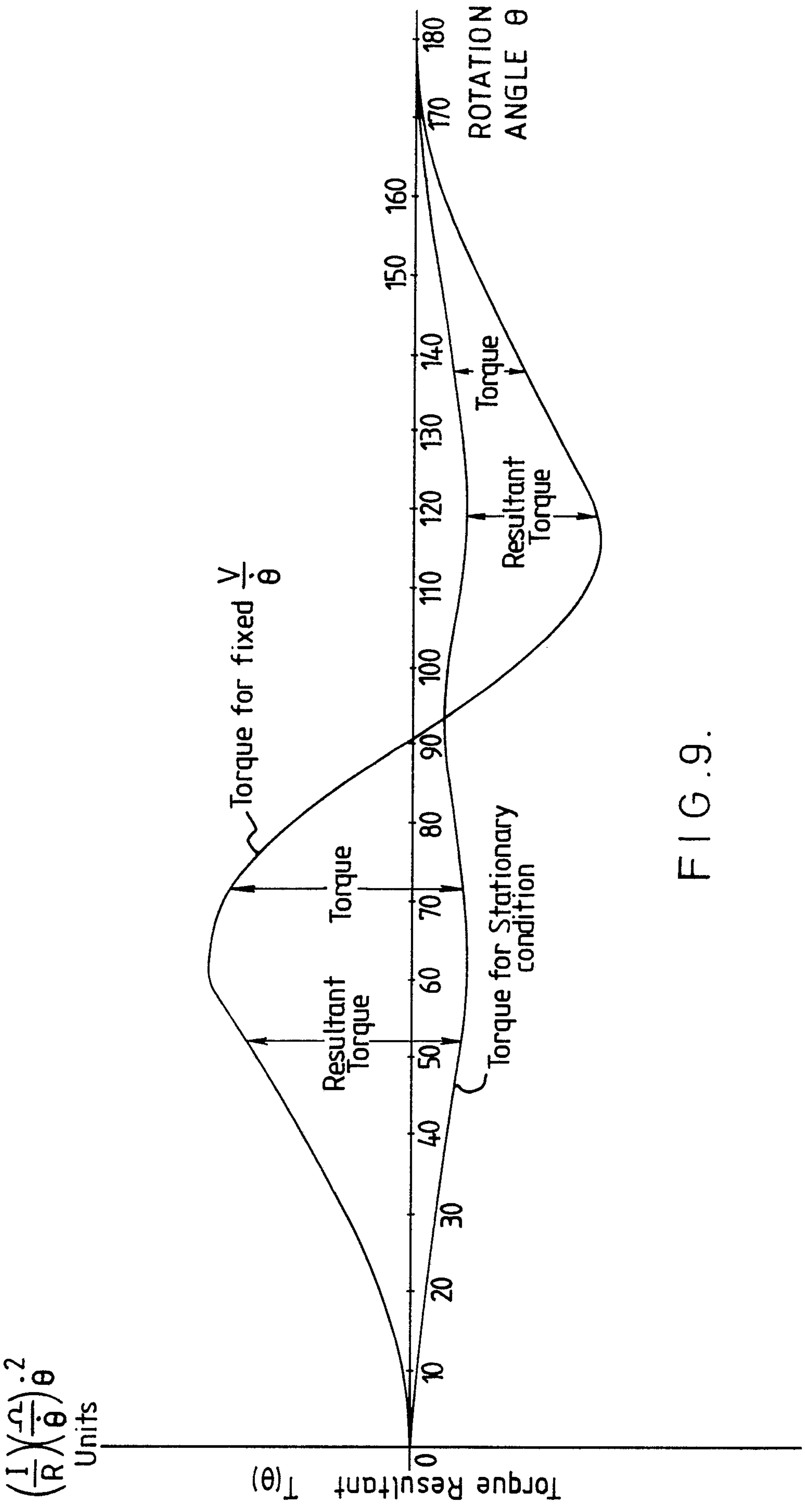

$\left(\frac{I}{R}\right)\left(\frac{\Omega}{\dot{\theta}}\right)\dot{\theta}^2$ Units
Torque Resultant $T(\theta)$
0
10
20
30
40
50
60
70
80
90
100
110
120
130
140
150
160
170
180
ROTATION ANGLE θ
Torque for fixed $\frac{V}{\dot{\theta}}$
Resultant Torque
Torque
Torque for Stationary condition
Resultant Torque
Torque


FIG.9.

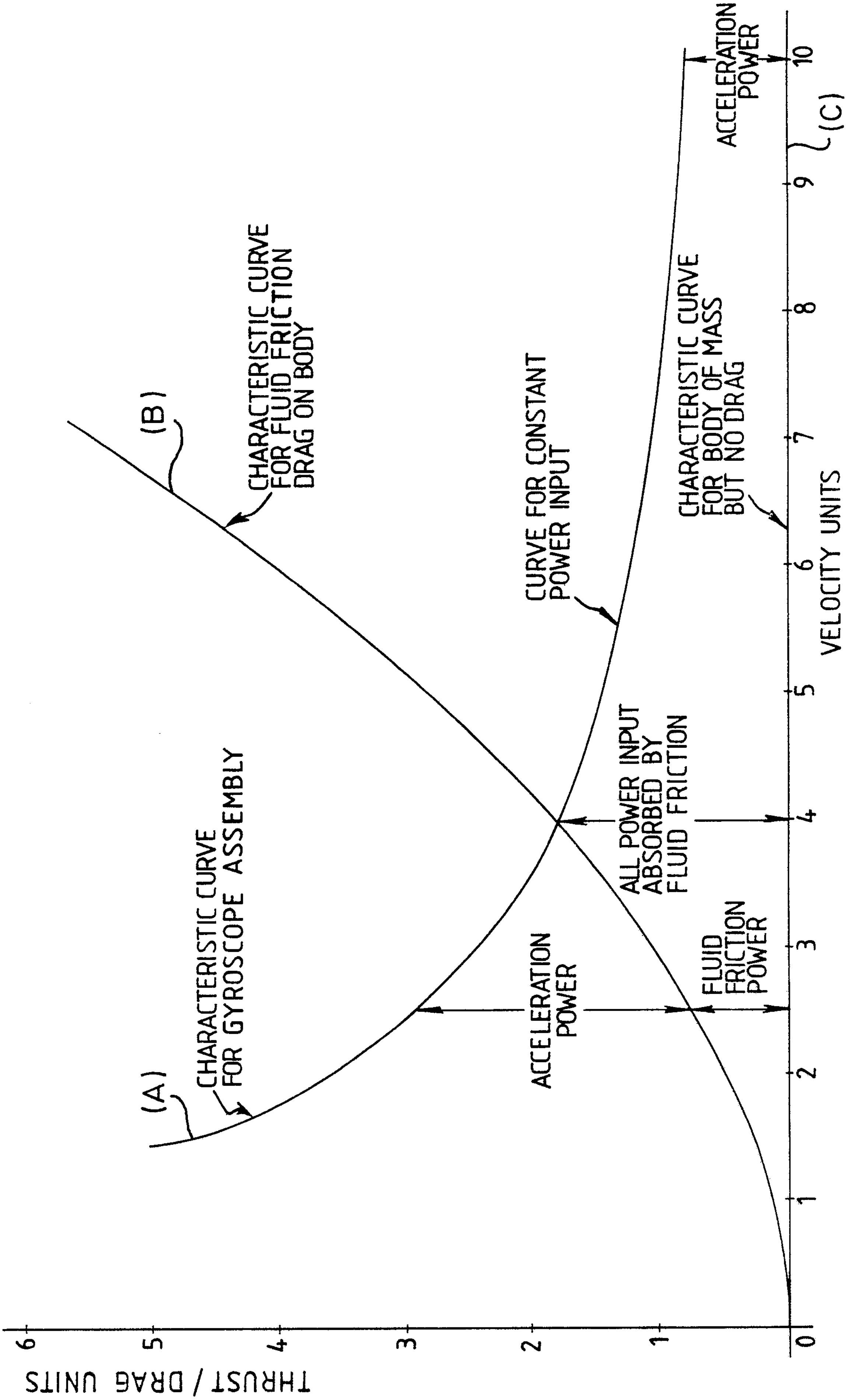
THRUST / DRAG UNITS
0
1
2
3
4
5
6
VELOCITY UNITS
0
1
2
3
4
5
6
7
8
9
10
(A)
CHARACTERISTIC CURVE FOR GYROSCOPE ASSEMBLY
(B)
CHARACTERISTIC CURVE FOR FLUID FRICTION DRAG ON BODY
CURVE FOR CONSTANT POWER INPUT
CHARACTERISTIC CURVE FOR BODY OF MASS BUT NO DRAG
(C)
ACCELERATION POWER
FLUID FRICTION POWER
ALL POWER INPUT ABSORBED BY FLUID FRICTION
ACCELERATION POWER

F I G.10.

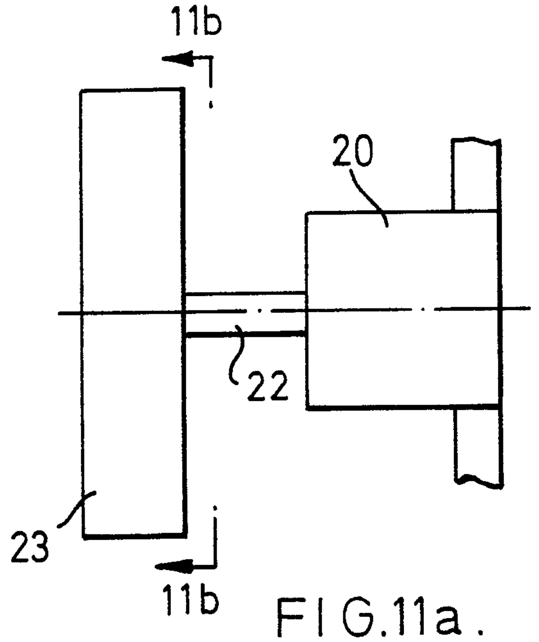


FIG.11a.

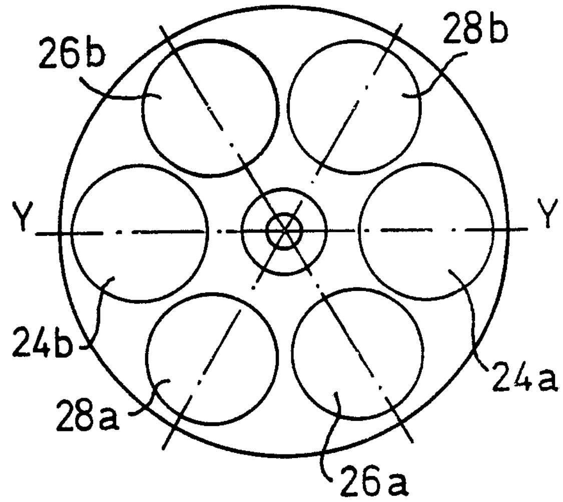


FIG.11b.

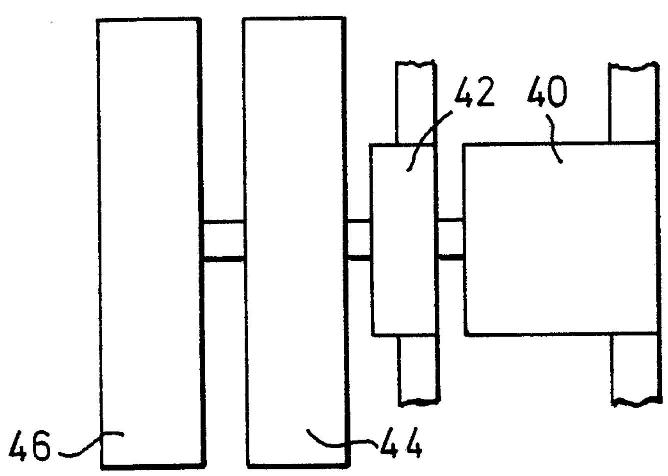


FIG.12.

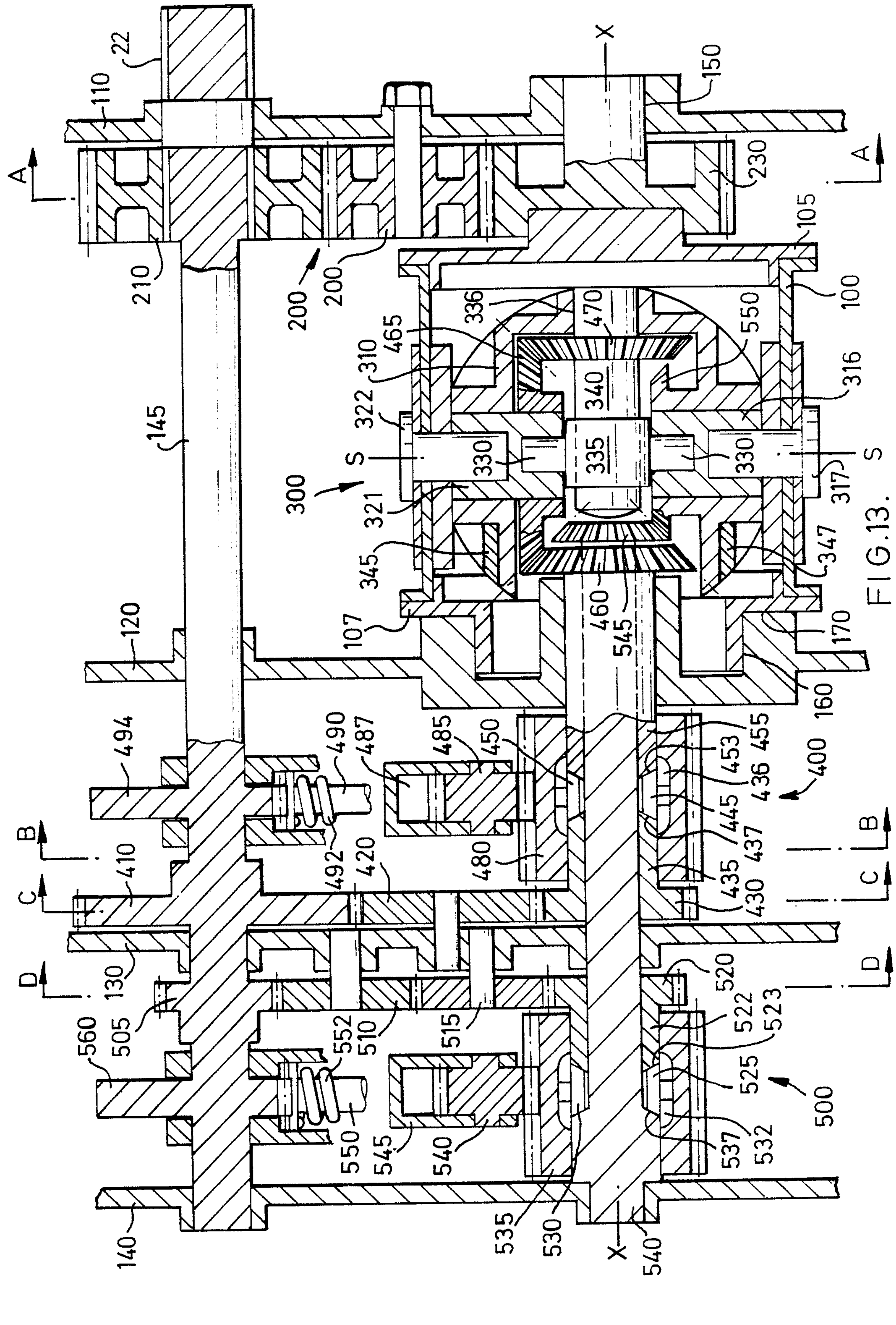

22
110
150
X
A
A
230
105
210
200
200
100
336
470
550
465
310
340
316
322
335
S
330
330
S
300
321
317
345
347
460
545
107
120
170
145
160
494
485
450
455
453
490
487
436
400
B
B
492
420
480
445
437
435
410
430
C
C
130
520
D
D
505
522
523
560
552
510
515
525
500
545
540
550
537
532
535
530
X
540
140


FIG.13.

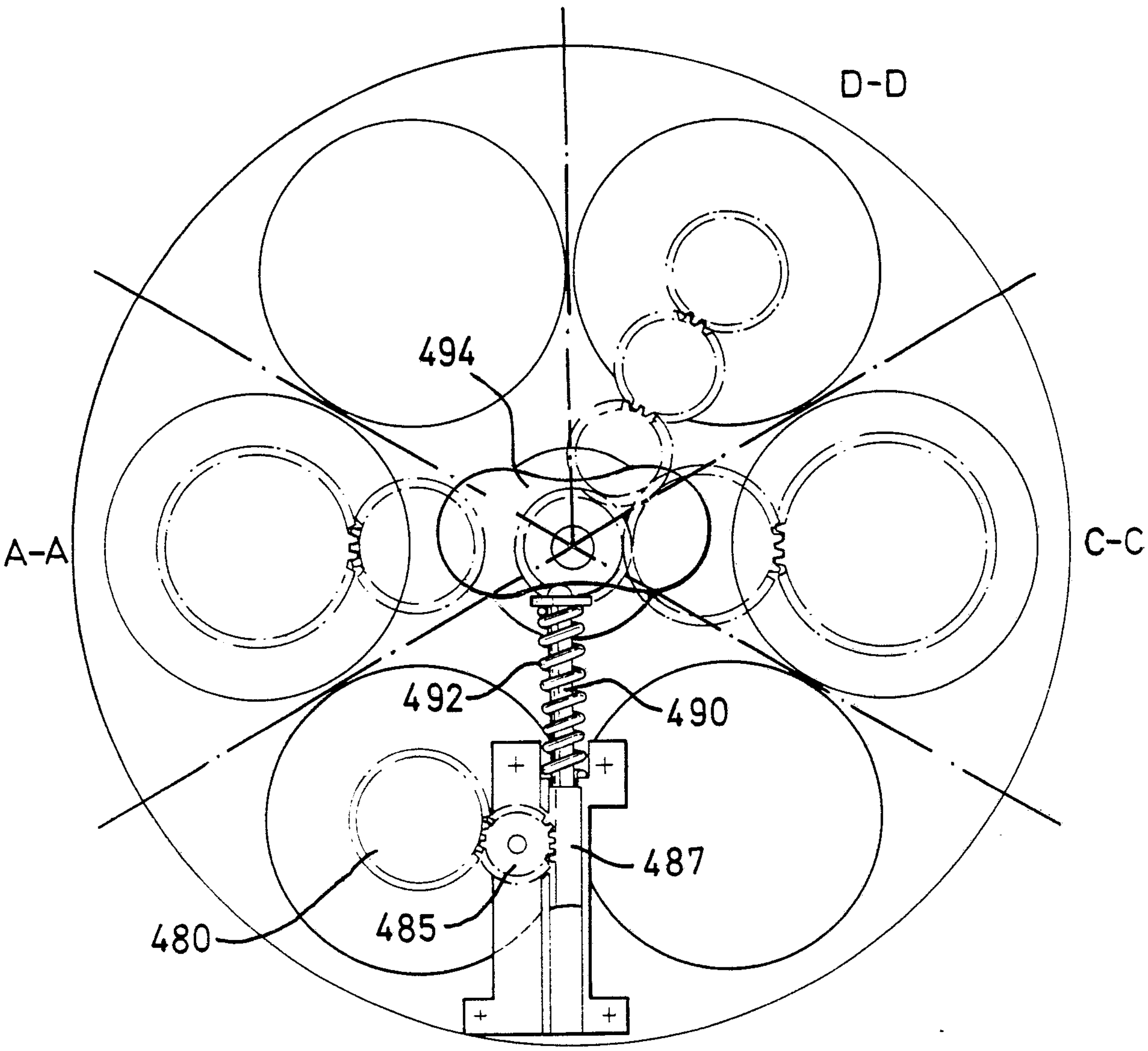


FIG.14.

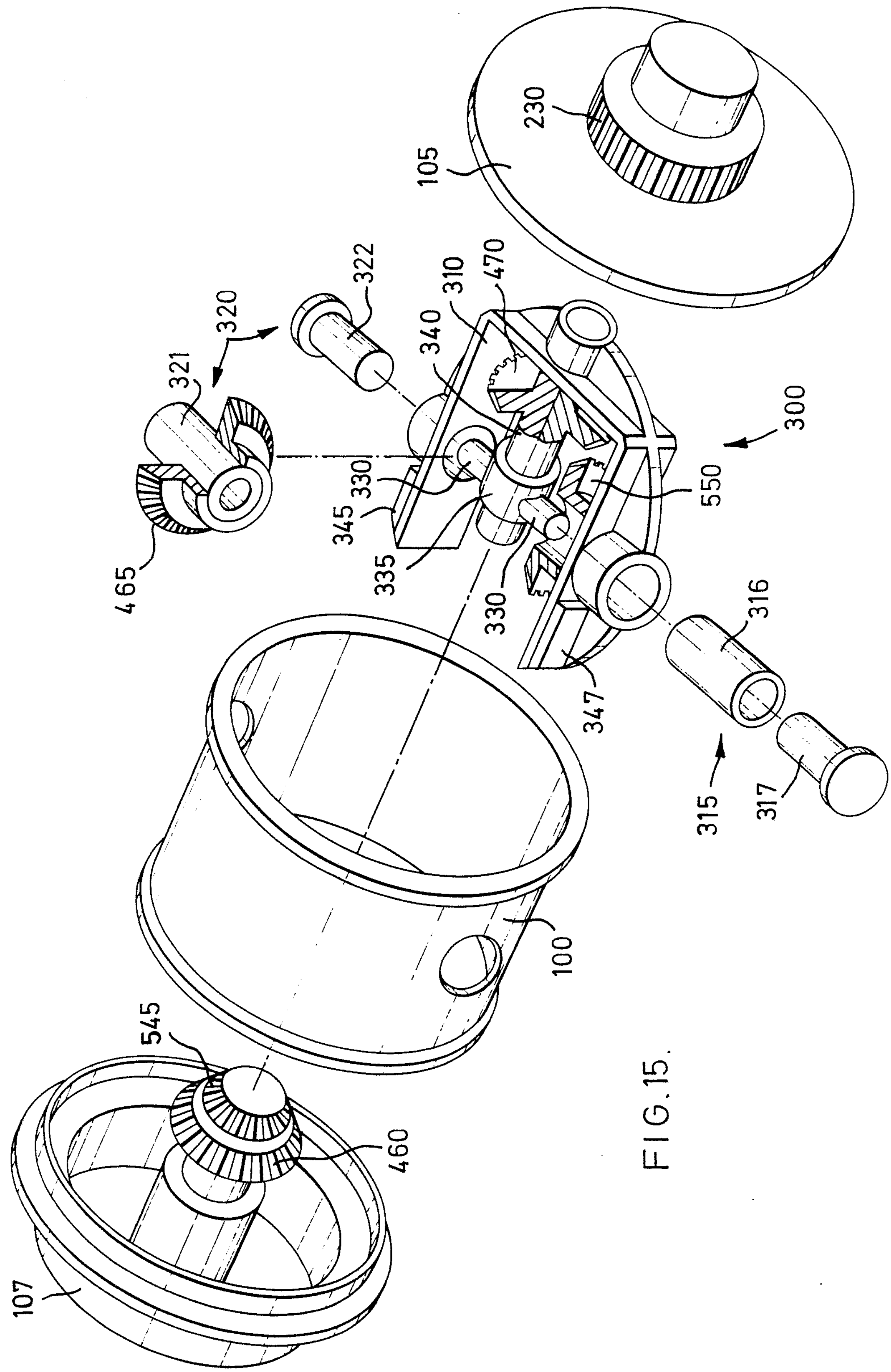
230
105
322
320
310
470
340
321
300
330
345
550
335
465
330
316
347
315
317
100
545
460
107

FIG.15.

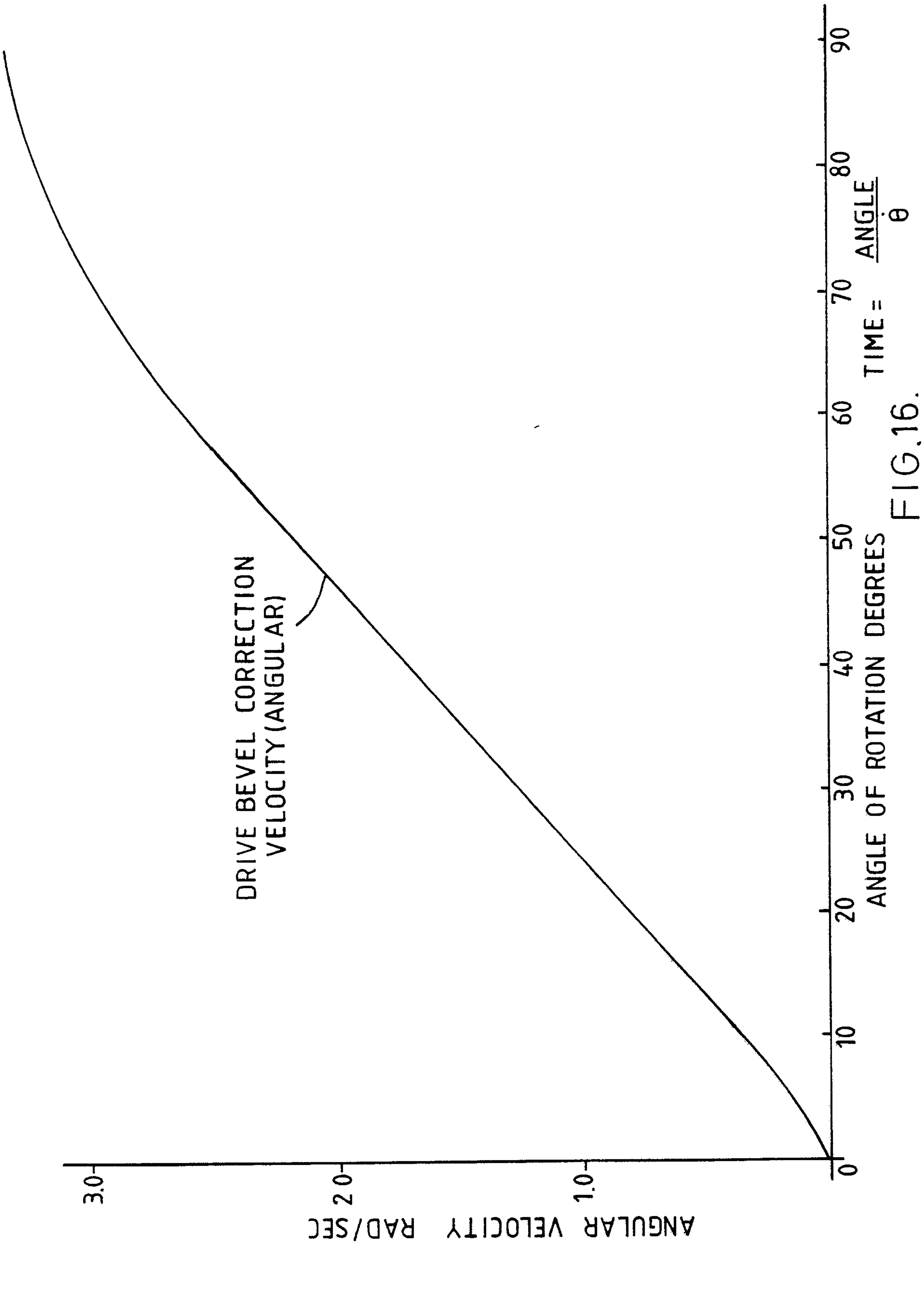
DRIVE BEVEL CORRECTION
VELOCITY (ANGULAR)
ANGULAR VELOCITY RAD/SEC
3.0
2.0
1.0
0
10
20
30
40
50
60
70
80
90
ANGLE OF ROTATION DEGREES
TIME = $\frac{ANGLE}{\dot{\theta}}$

FIG.16.

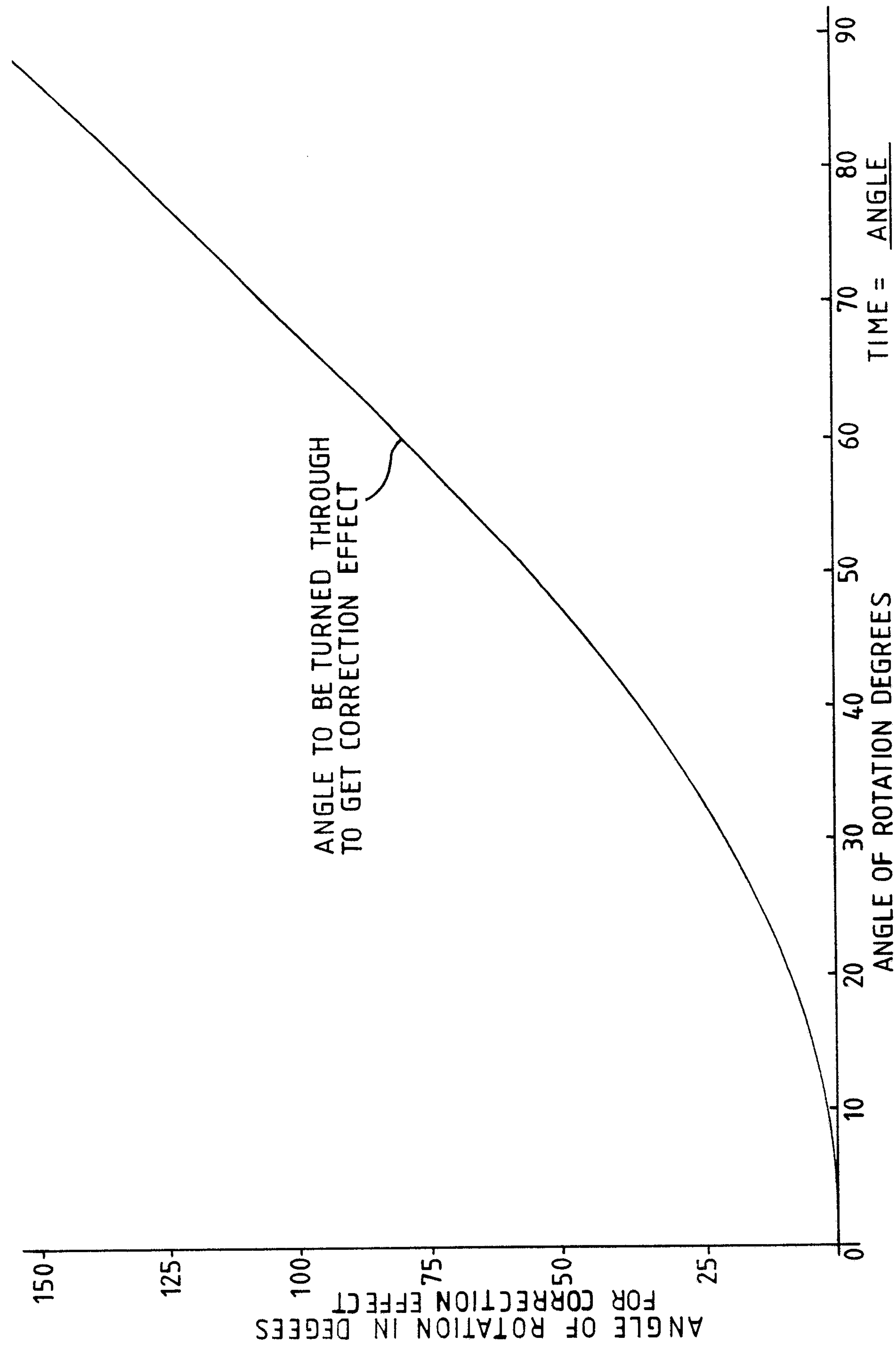
ANGLE TO BE TURNED THROUGH
TO GET CORRECTION EFFECT
ANGLE OF ROTATION DEGREES
TIME = $\frac{ANGLE}{\dot{\theta}}$
0
10
20
30
40
50
60
70
80
90
25
50
75
100
125
150
ANGLE OF ROTATION IN DEGEES
FOR CORRECTION EFFECT

FIG.17.

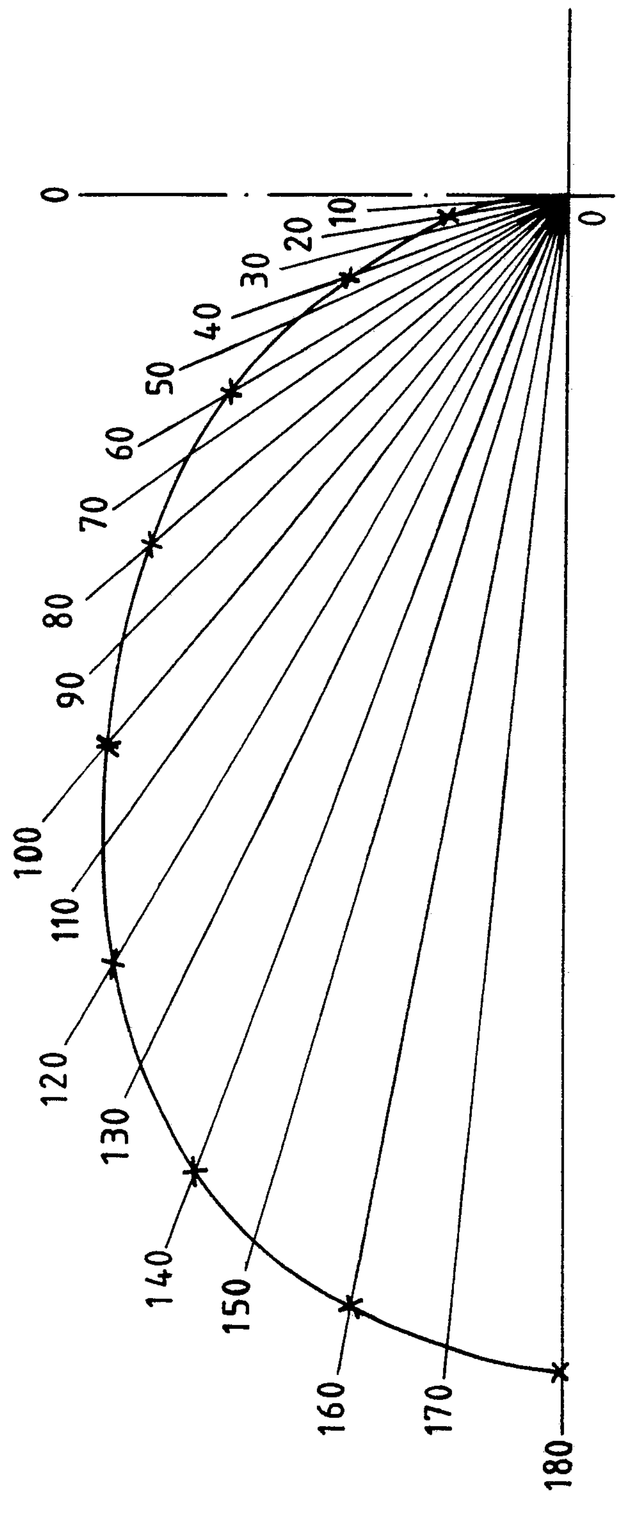


FIG. 18.

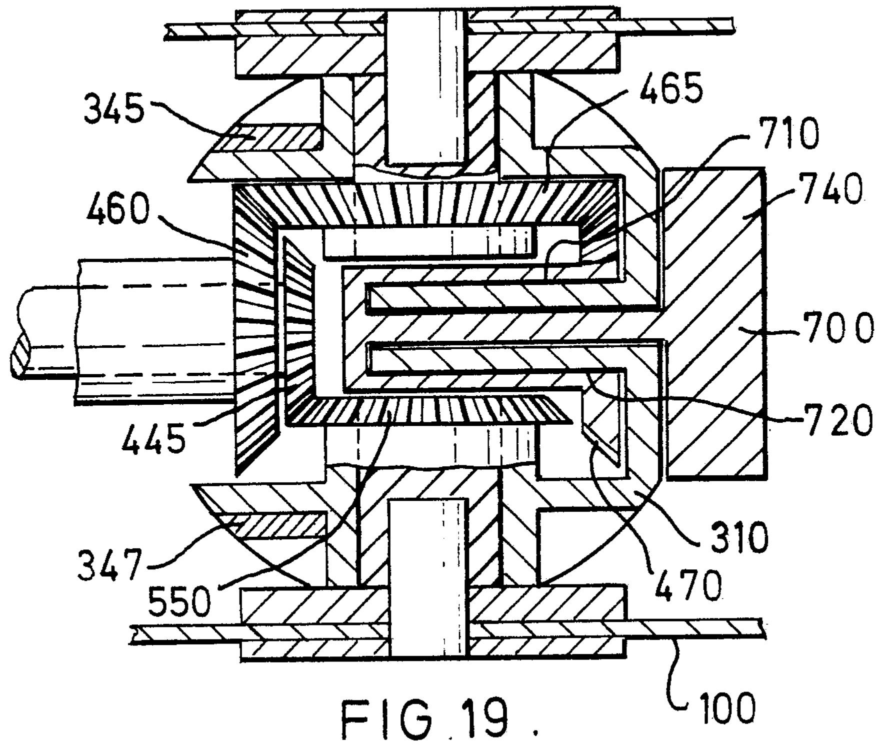


FIG.19.

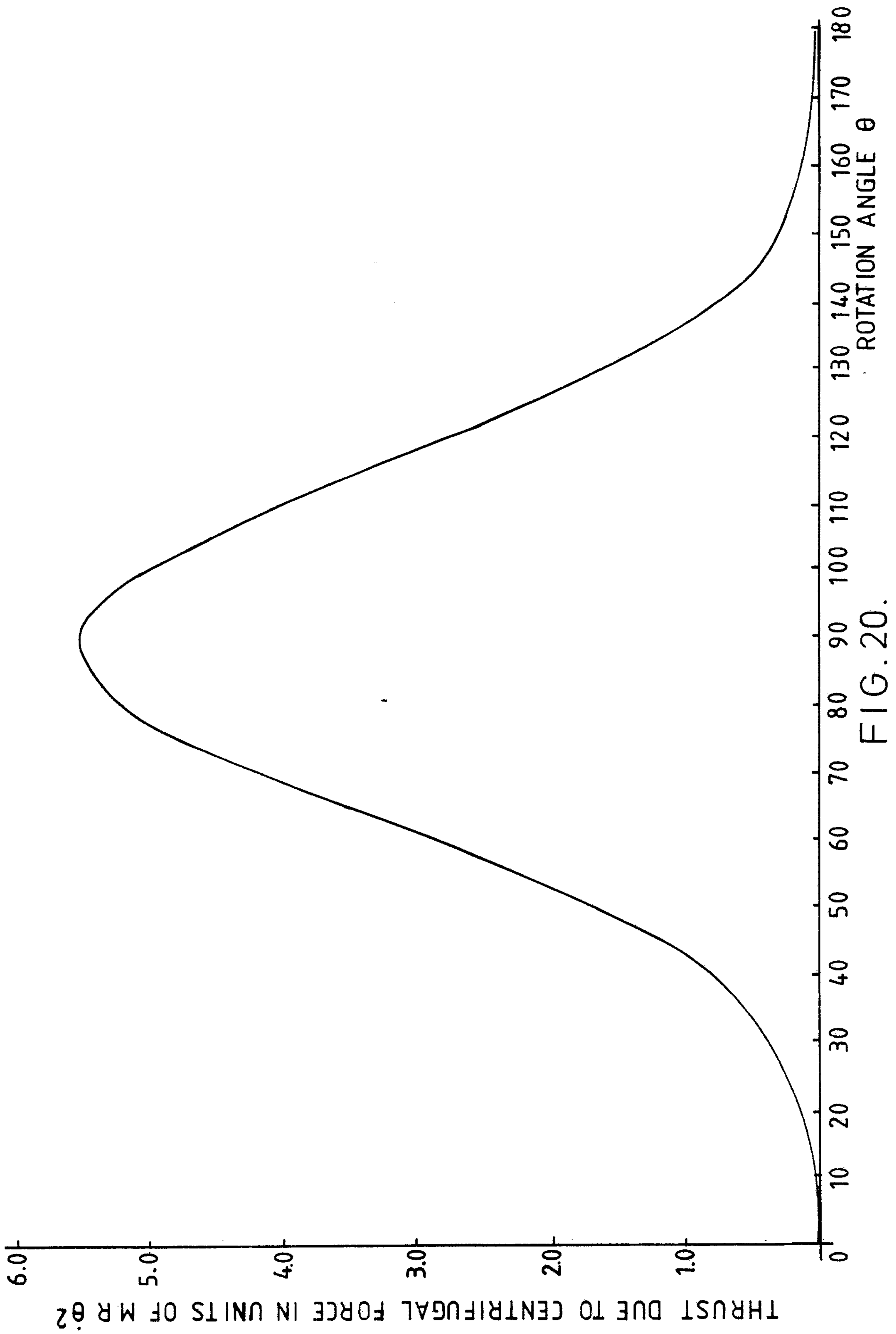
THRUST DUE TO CENTRIFUGAL FORCE IN UNITS OF M R θ̇2
6.0
5.0
4.0
3.0
2.0
1.0
0
10
20
30
40
50
60
70
80
90
100
110
120
130
140
150
160
170
180
ROTATION ANGLE θ

FIG. 20.

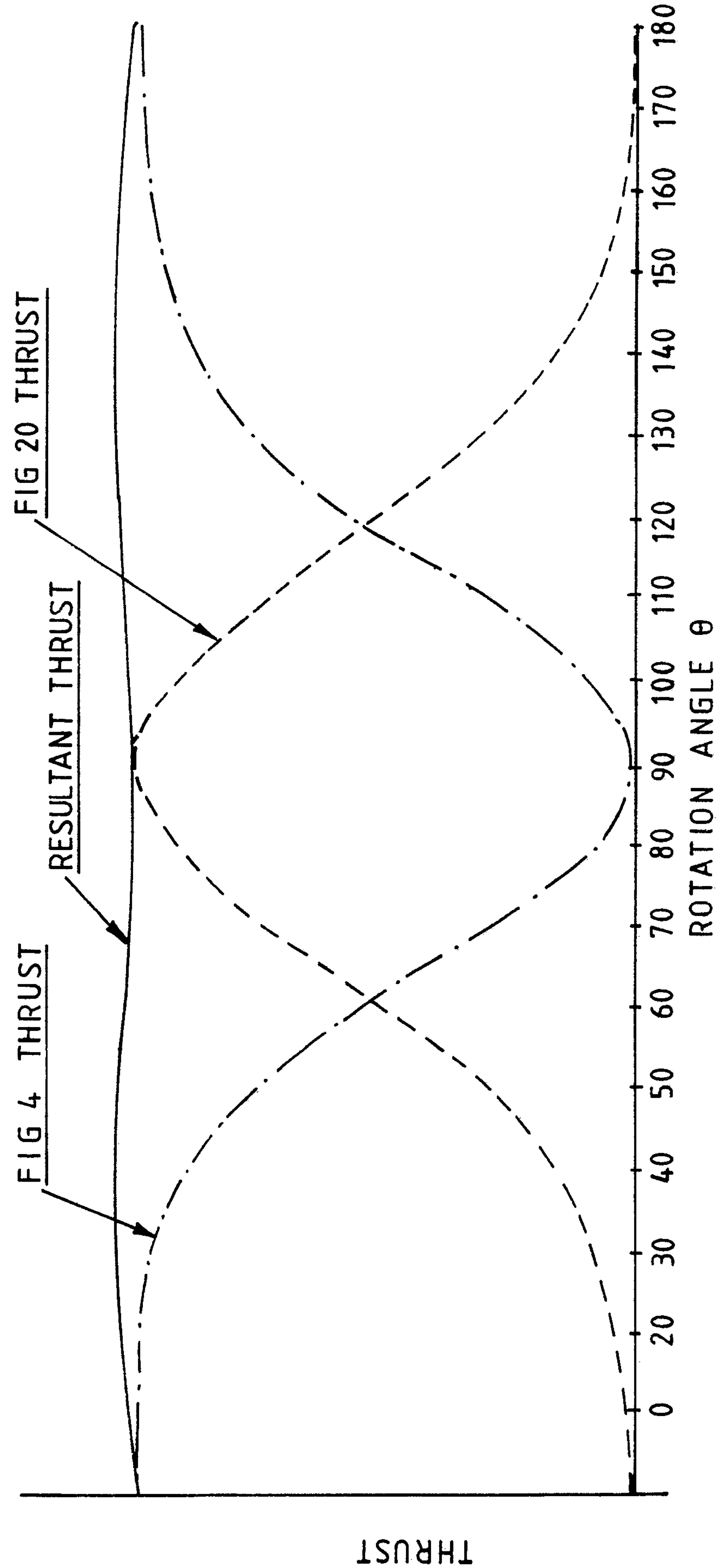
FIG 4 THRUST
RESULTANT THRUST
FIG 20 THRUST
THRUST
ROTATION ANGLE θ
0
10
20
30
40
50
60
70
80
90
100
110
120
130
140
150
160
170
180

FIG.21.

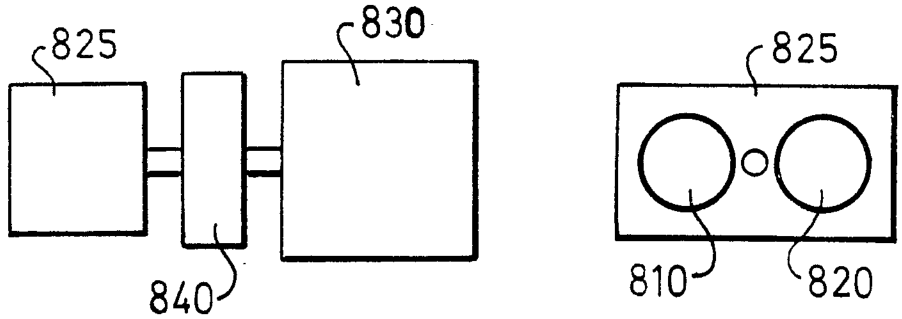


FIG.22a.

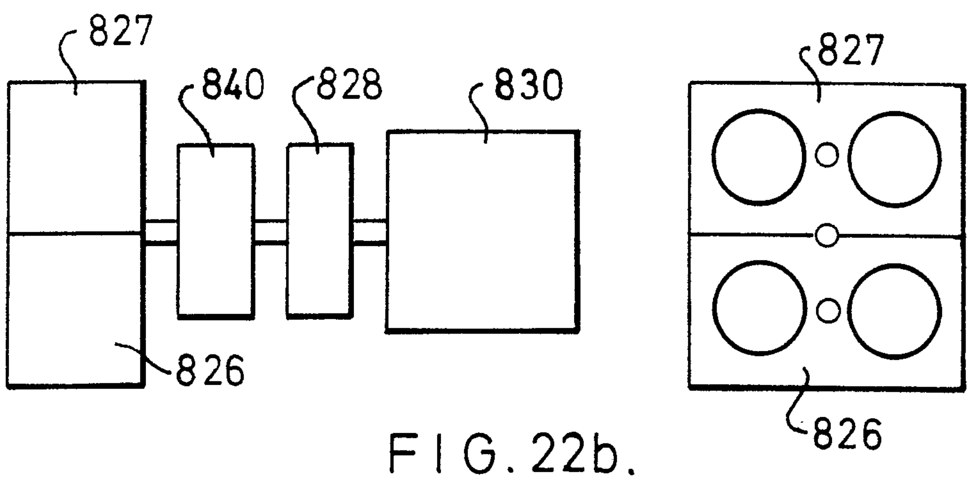


FIG.22b.

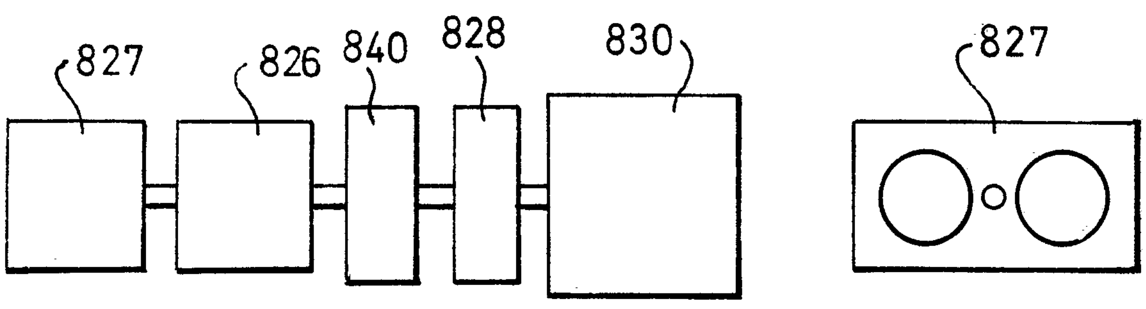


FIG.22c.

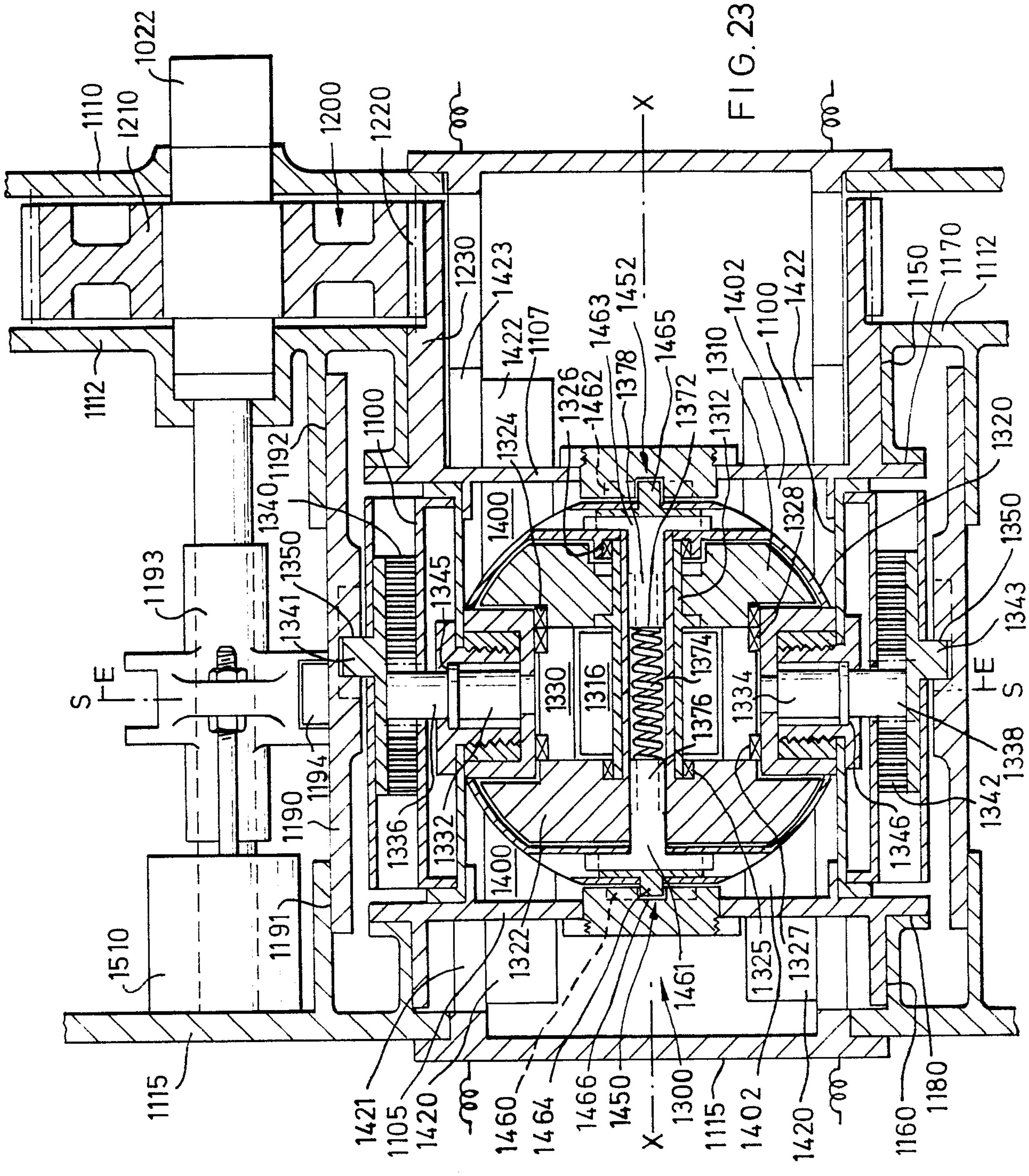

FIG. 23.

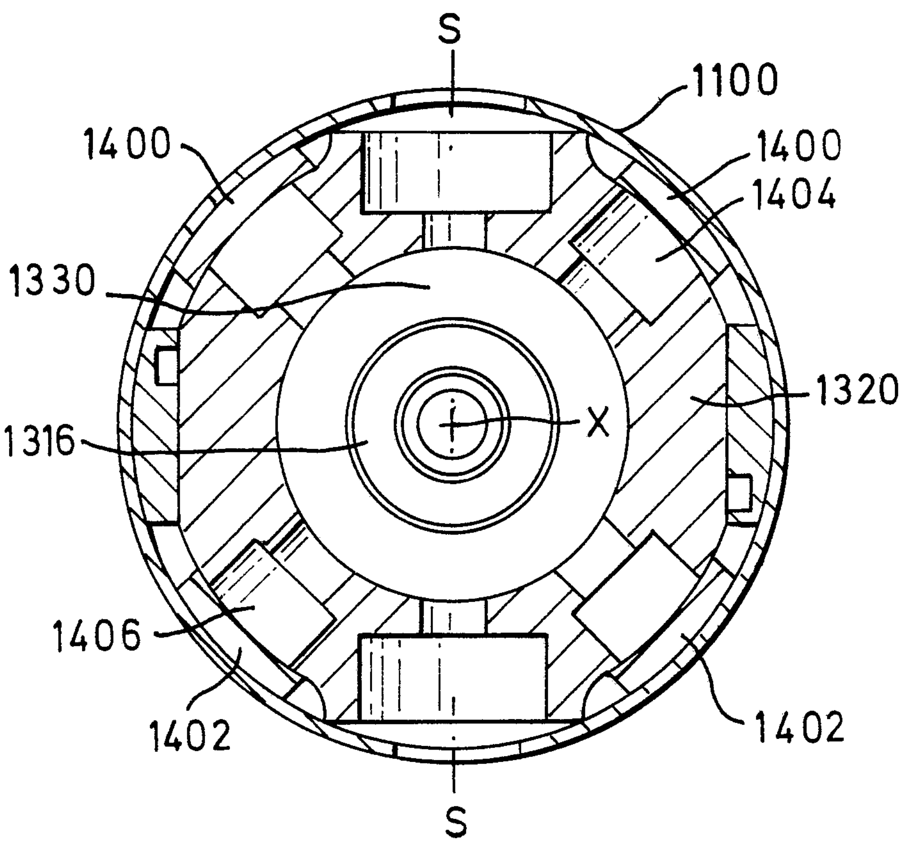


FIG.24.

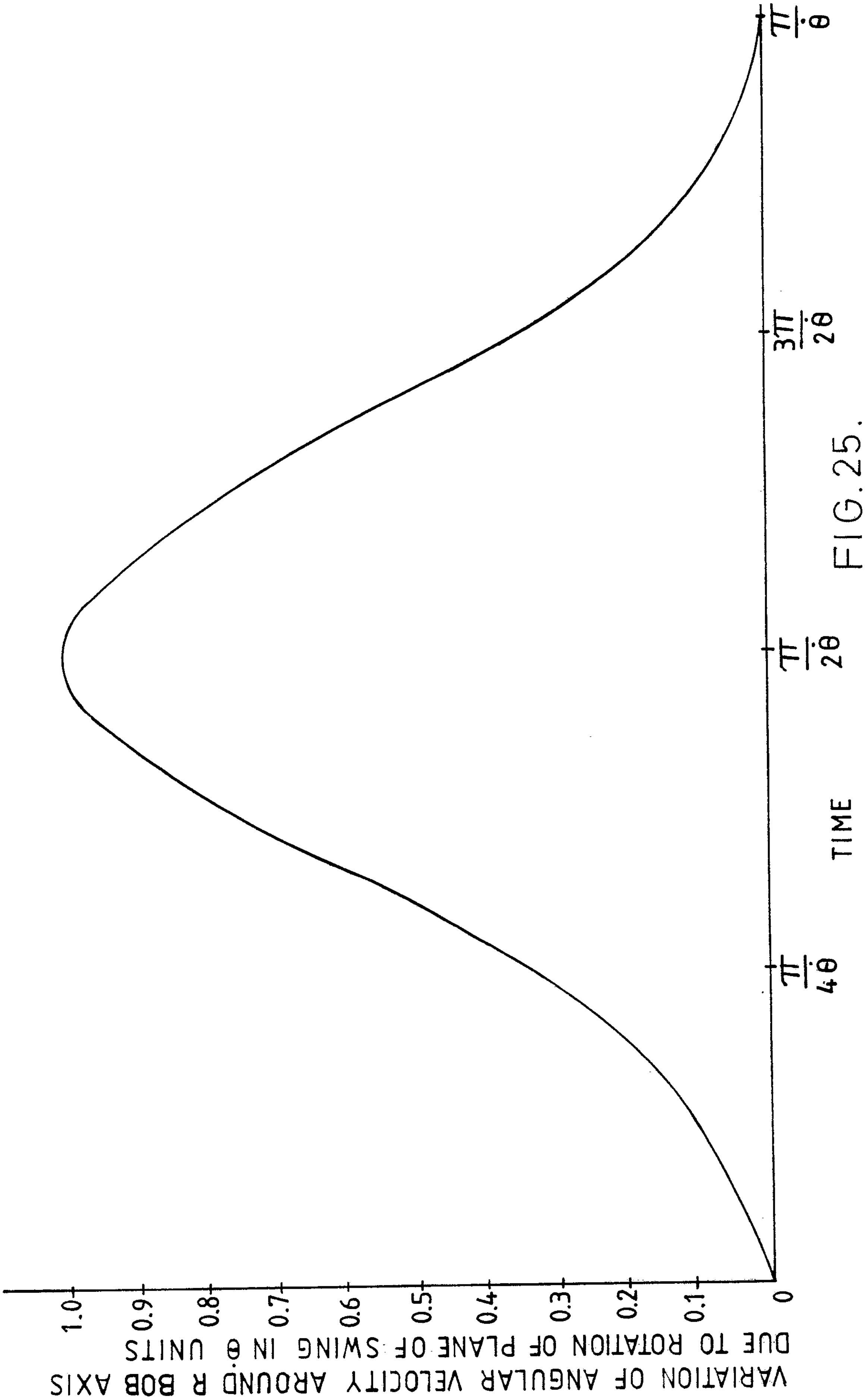
VARIATION OF ANGULAR VELOCITY AROUND R BOB AXIS
DUE TO ROTATION OF PLANE OF SWING IN $\dot{\theta}$ UNITS
1.0
0.9
0.8
0.7
0.6
0.5
0.4
0.3
0.2
0.1
0
TIME
$\frac{\pi}{4\dot{\theta}}$
$\frac{\pi}{2\dot{\theta}}$
$\frac{3\pi}{2\dot{\theta}}$
$\frac{\pi}{\dot{\theta}}$

FIG. 25.

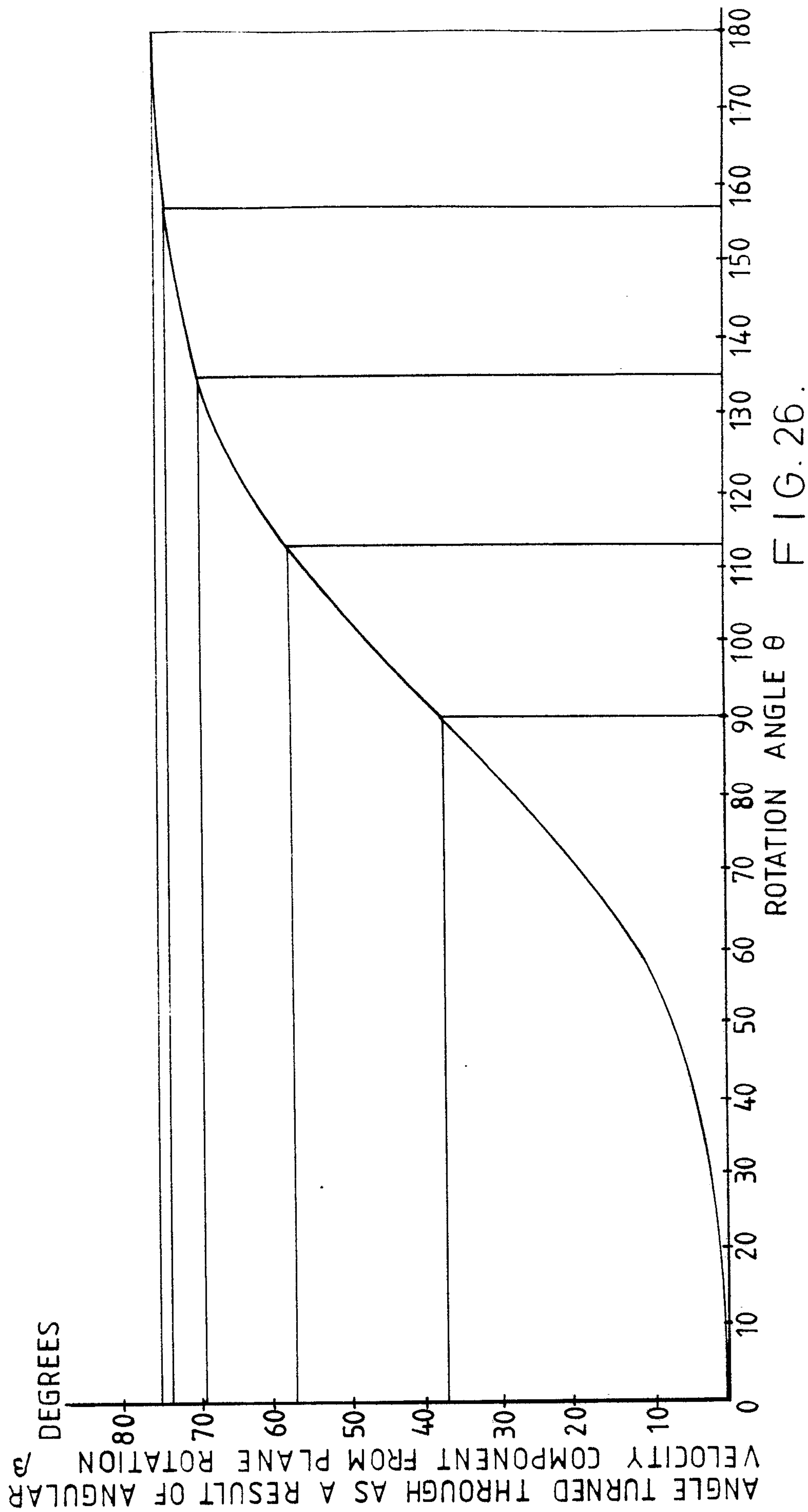
DEGREES
β
ANGLE TURNED THROUGH AS A RESULT OF ANGULAR VELOCITY COMPONENT FROM PLANE ROTATION
0
10
20
30
40
50
60
70
80
0
10
20
30
40
50
60
70
80
90
100
110
120
130
140
150
160
170
180
ROTATION ANGLE θ

FIG. 26.

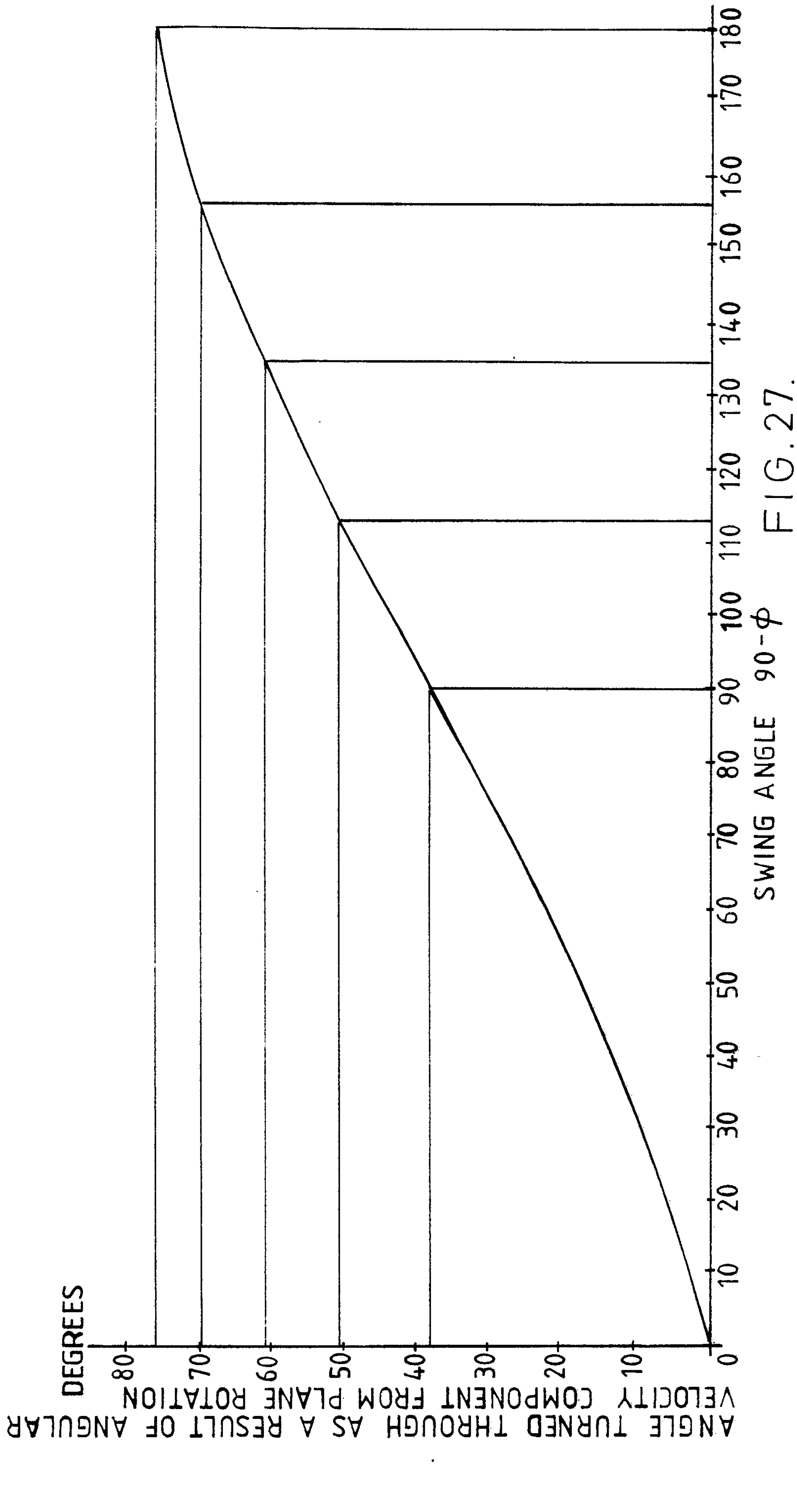
DEGREES
80
70
60
50
40
30
20
10
0
ANGLE TURNED THROUGH AS A RESULT OF ANGULAR
VELOCITY COMPONENT FROM PLANE ROTATION
10
20
30
40
50
60
70
80
90
100
110
120
130
140
150
160
170
180
SWING ANGLE 90-φ

FIG. 27.

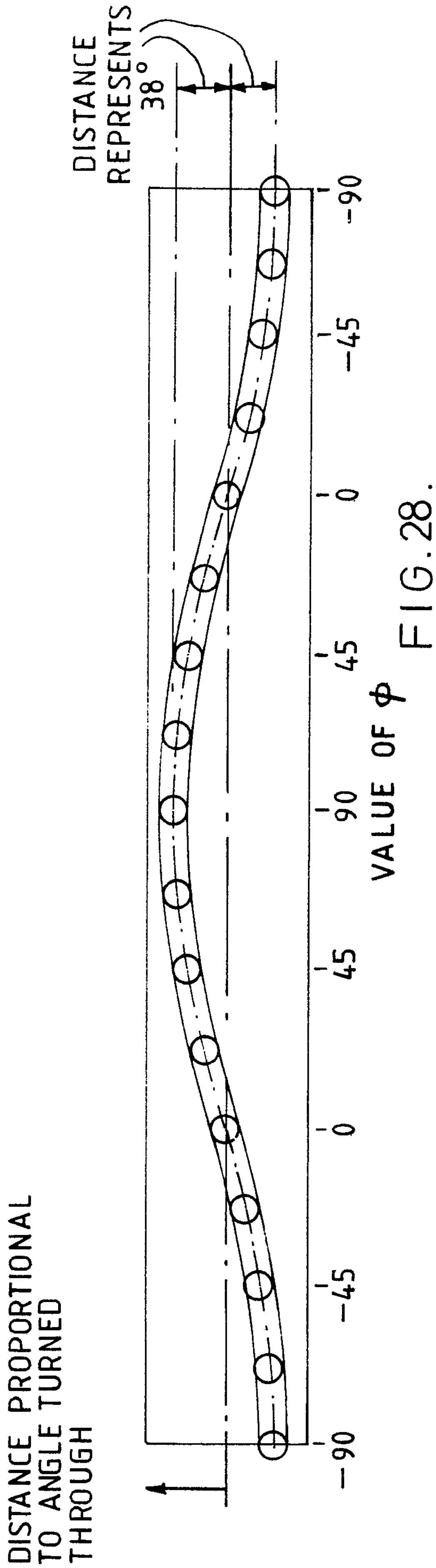
DISTANCE REPRESENTS 38°
DISTANCE PROPORTIONAL TO ANGLE TURNED THROUGH
-90
-45
0
45
90
45
0
-45
-90
VALUE OF φ

FIG. 28.

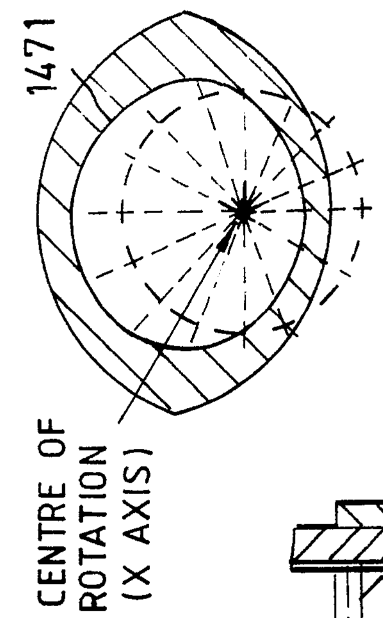
1471
CENTRE OF
ROTATION
(X AXIS)

FIG.30.

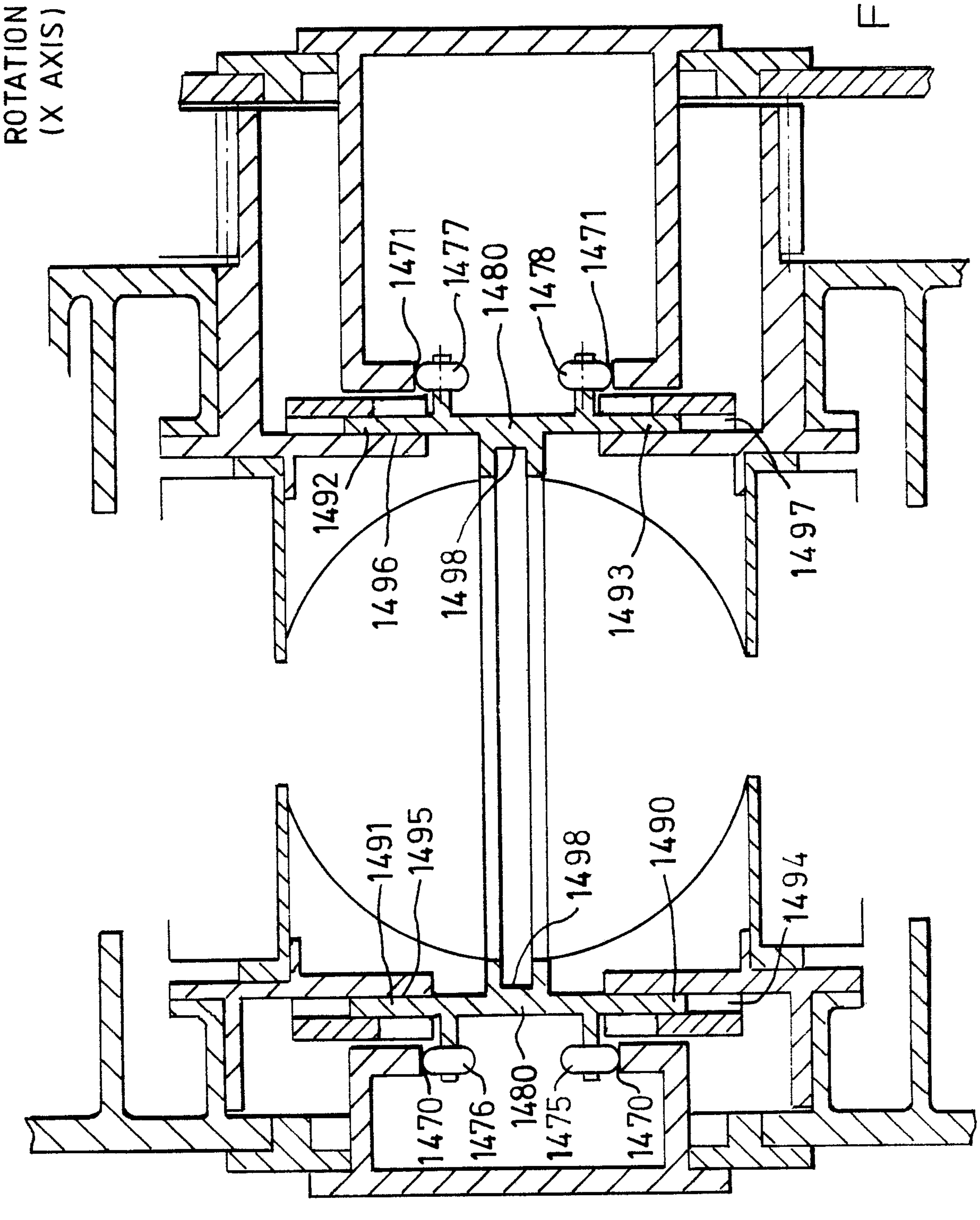
1471
1477
1480
1478
1471
1492
1496
1498
1493
1497
1491
1495
1498
1490
1494
1470
1476
1480
1475
1470

FIG.29.

FIG.31.

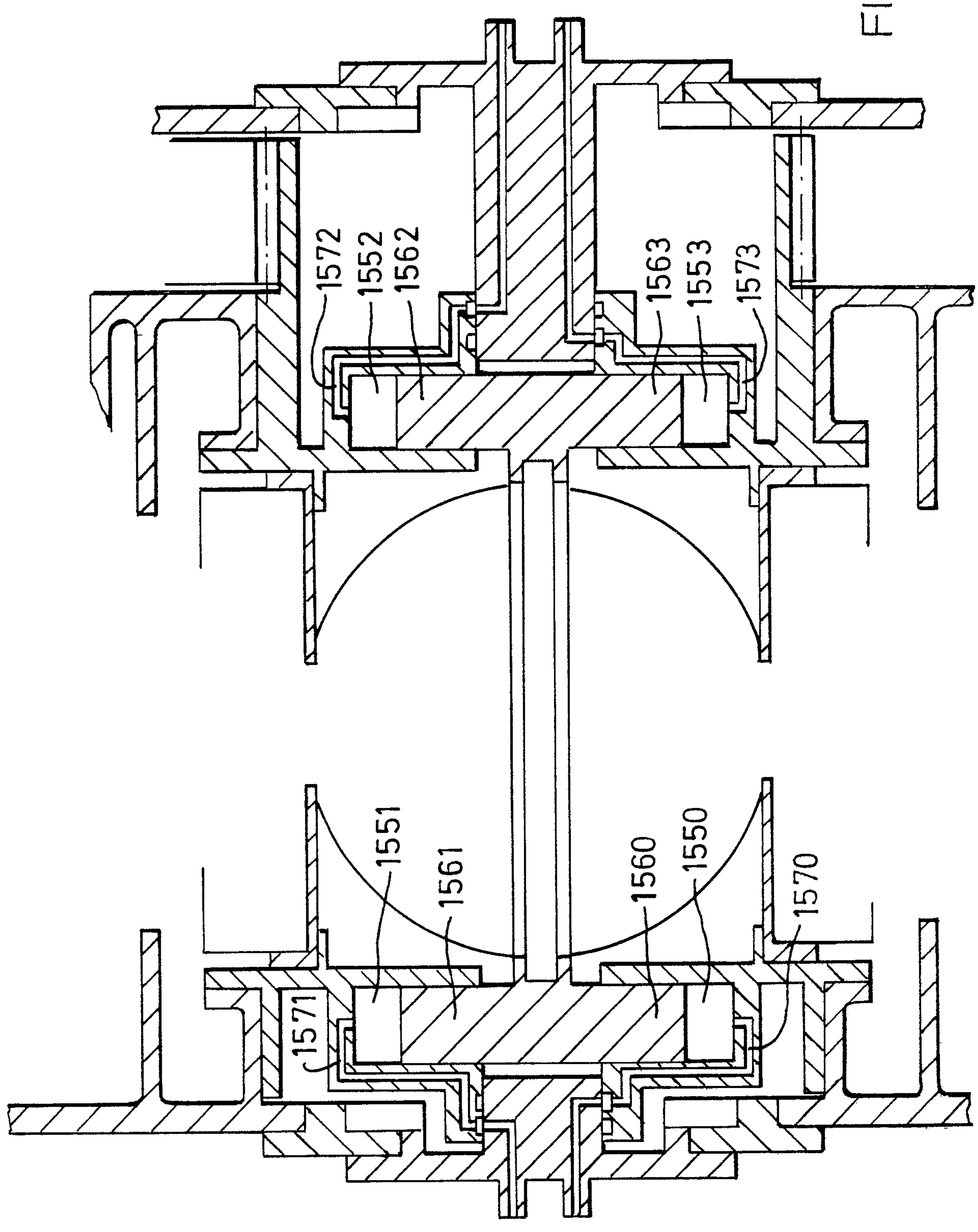

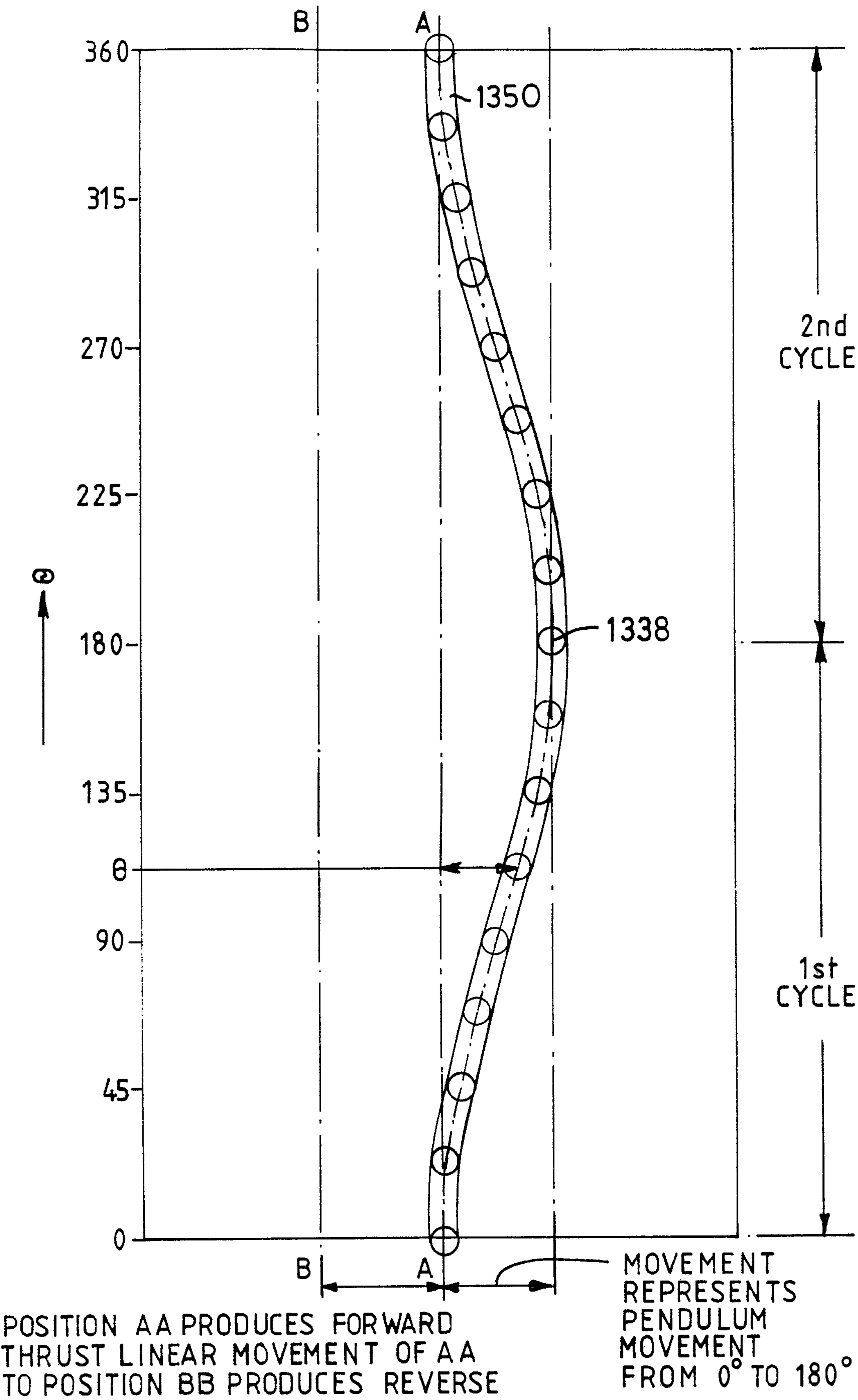


POSITION AA PRODUCES FORWARD THRUST LINEAR MOVEMENT OF AA TO POSITION BB PRODUCES REVERSE THRUST.

FIG.32.

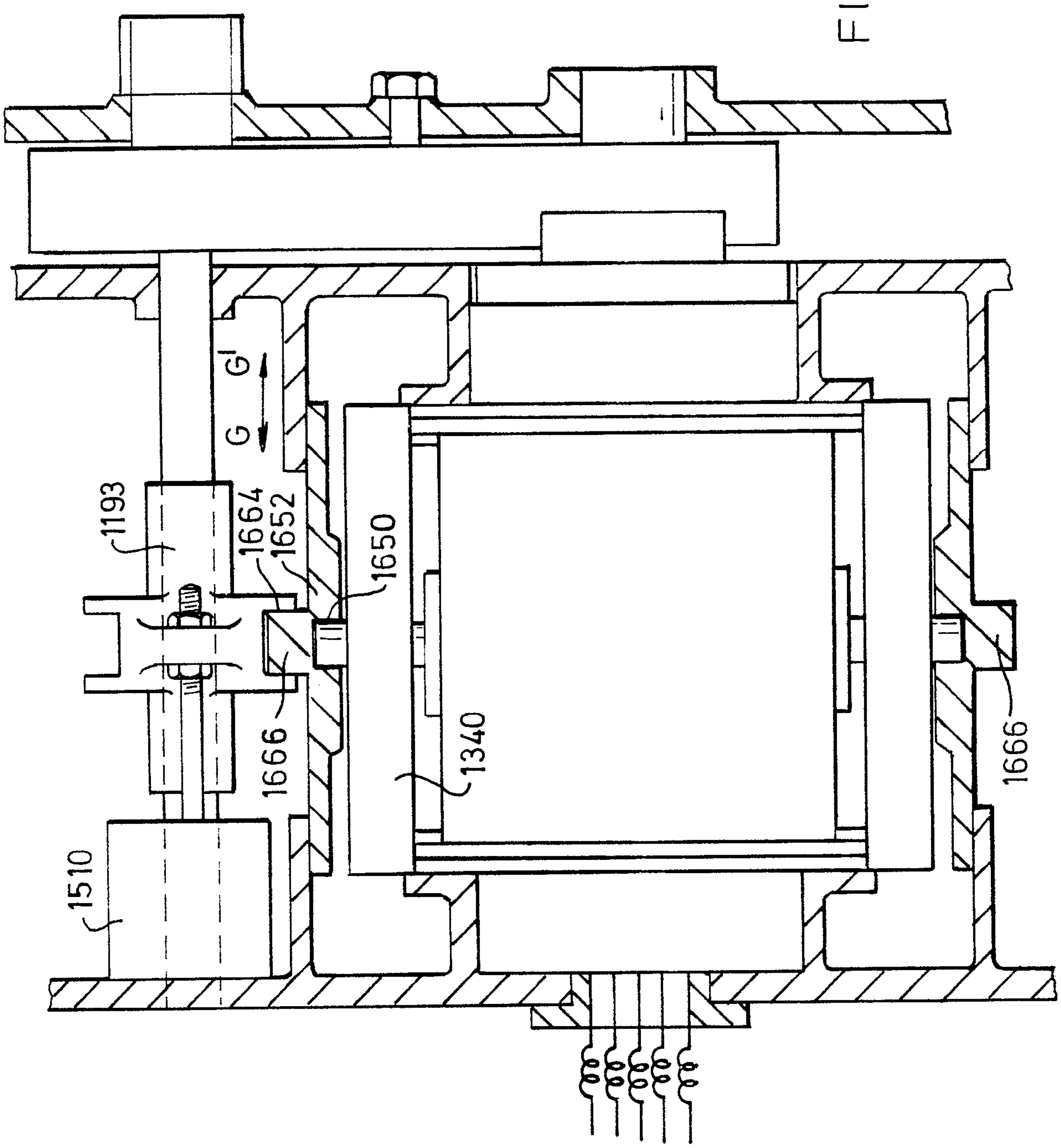


FIG.33.

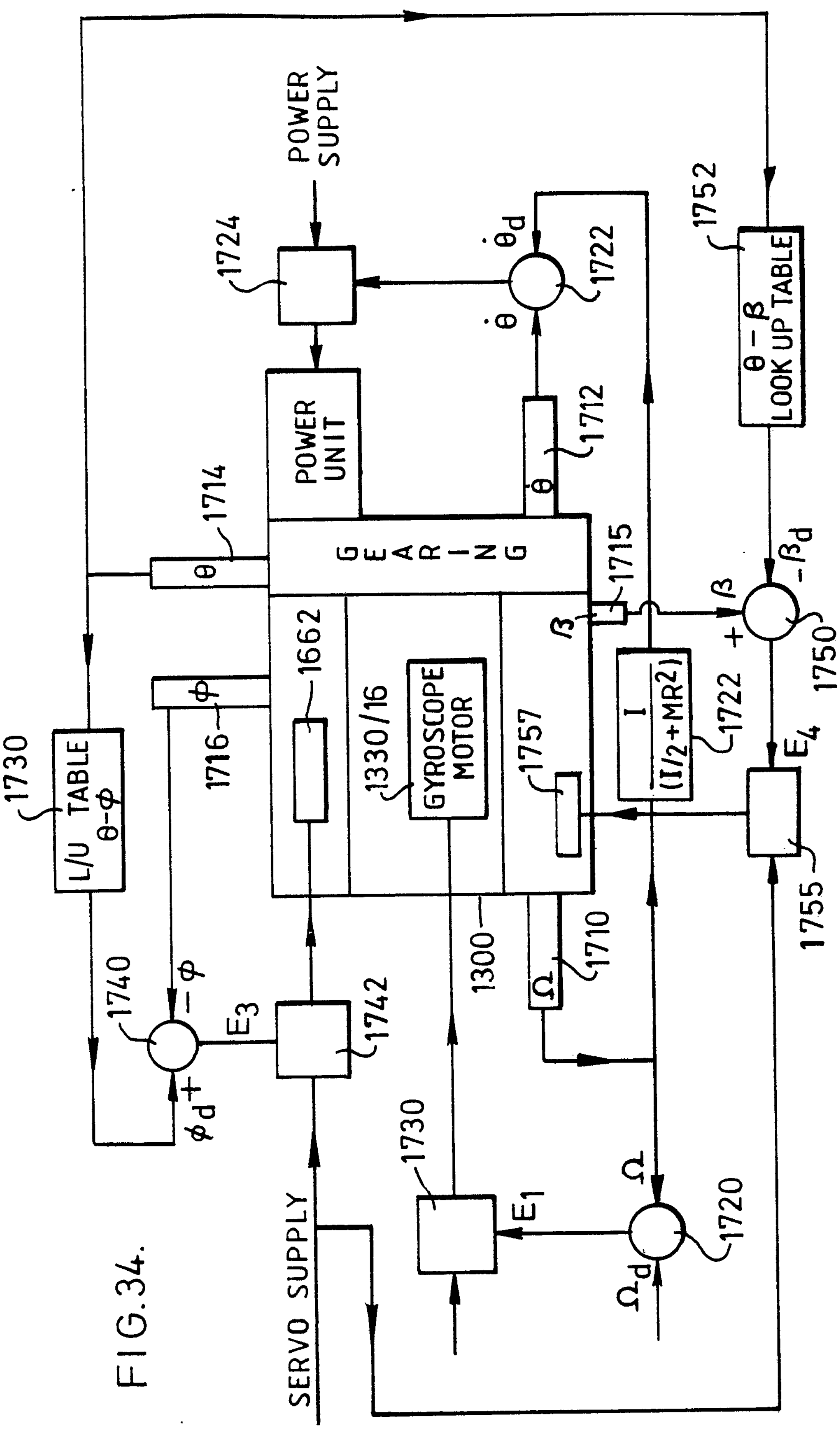
POWER SUPPLY
1724
POWER UNIT
GEARING
1714
θ
1712
θ
$\dot{\theta}$
$\dot{\theta}_d$
1722
1752
θ − β LOOK UP TABLE
1715
β
β
+
$-\beta_d$
1750
1662
1330/16
GYROSCOPE MOTOR
1757
$\frac{I}{(I/_2+MR^2)}$
1722
$E_4$
1755
1716
φ
L/U TABLE θ−φ
1730
1740
−φ
$E_3$
1742
$\phi_d$+
1300
1710
Ω
1730
$E_1$
Ω
1720
$\Omega_d$
SERVO SUPPLY

FIG.34.

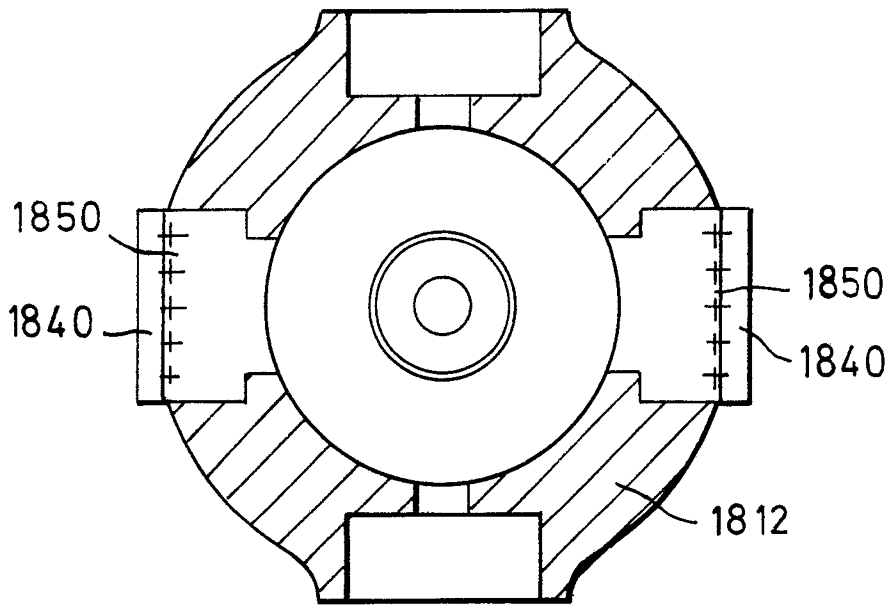


FIG.35a.

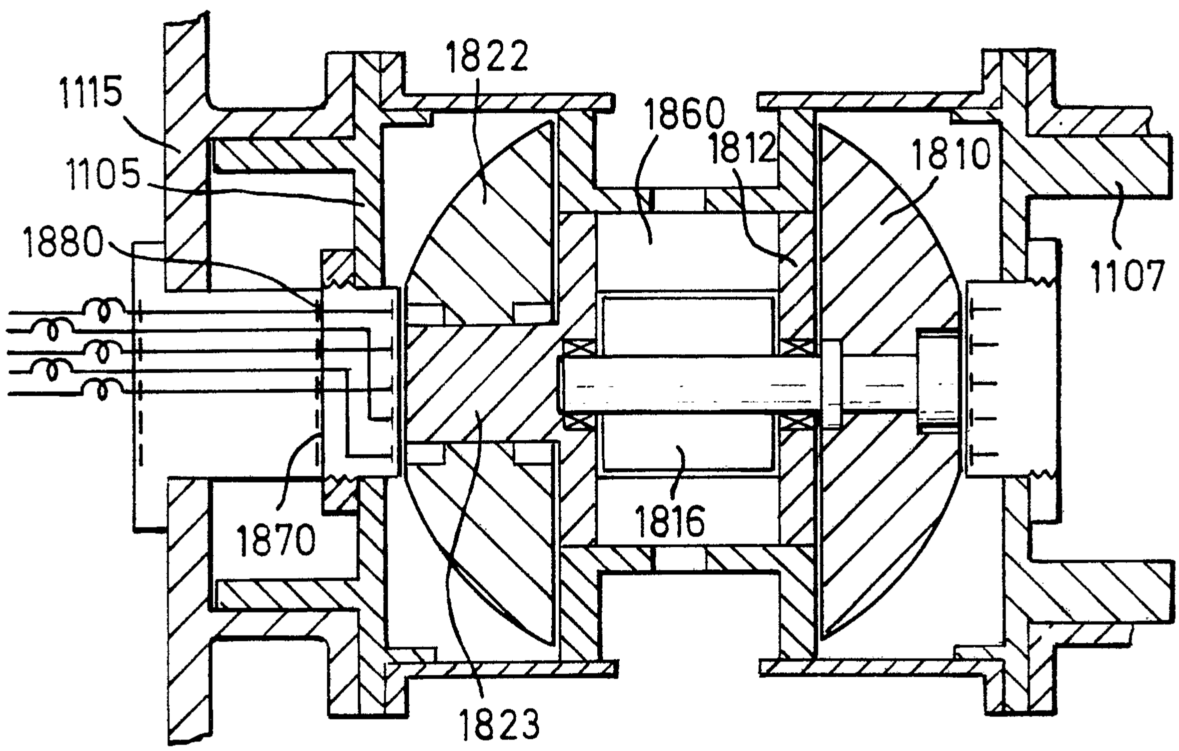


FIG.35b.